(19) Europäisches Patentamt
European Patent Office
Office européen des brevets

(11) EP 3 609 685 B1

(12) EUROPEAN PATENT SPECIFICATION

(45) Date of publication and mention of the grant of the patent:
**28.12.2022 Bulletin 2022/52**

(21) Application number: **18720742.8**

(22) Date of filing: **10.04.2018**

(51) International Patent Classification (IPC):
***B29C 64/393*** *(2017.01)* ***B29C 64/118*** *(2017.01)*
***B33Y 50/02*** *(2015.01)*

(52) Cooperative Patent Classification (CPC):
**B29C 64/393; B29C 64/118; B33Y 50/02**

(86) International application number:
**PCT/US2018/026875**

(87) International publication number:
**WO 2018/191258 (18.10.2018 Gazette 2018/42)**

(54) **SYSTEMS AND METHODS FOR EXTRUSION CONTROL IN THREE-DIMENSIONAL (3D) PRINTING**

SYSTEME UND VERFAHREN ZUR EXTRUSIONSSTEUERUNG BEIM DREIDIMENSIONALEN (3D)-DRUCKEN

SYSTÈMES ET PROCÉDÉS DE COMMANDE D’EXTRUSION DANS UNE IMPRESSION TRIDIMENSIONNELLE (3D)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.04.2017 US 201762485722 P**

(43) Date of publication of application:
**19.02.2020 Bulletin 2020/08**

(73) Proprietor: **Desktop Metal, Inc.**
**Burlington, MA 01803 (US)**

(72) Inventors:
- **BARBATI, Alexander, C.**
  **Burlington, MA 01803 (US)**
- **FONTANA, Richard, Remo**
  **Burlington, MA 01803 (US)**
- **LAPLANTE, John**
  **Burlington, MA 01803 (US)**
- **MYERBERG, Jonah, Samuel**
  **Burlington**
  **MA 01803 (US)**

(74) Representative: **Booth, Catherine Louise et al**
**Mathys & Squire**
**The Shard**
**32 London Bridge Street**
**London SE1 9SG (GB)**

(56) References cited:
**WO-A1-03/051598** **US-A1- 2003 064 124**
**US-A1- 2015 097 308**

- **Brian N. Turner ET AL: "A review of melt extrusion additive manufacturing processes: I. Process design and modeling", Rapid Prototyping Journal, 14 April 2014 (2014-04-14), pages 192-204, XP055359823, Bradford DOI: 10.1108/RPJ-01-2013-0012 Retrieved from the Internet: URL:http://wiki.re3d.org/images/b/b5/Review_of_melt_extrusion.pdf**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 609 685 B1

## Description

RELATED APPLICATION

BACKGROUND

Three-dimensional (3D) printing, also known as additive manufacturing (AM), may refer to processes used to create a 3D object in which successive layers of material are formed under computer control to create the 3D object. The 3D object may be of almost any shape or geometry and may be produced based on data from a computer aided design (CAD) model representing the 3D object, or any other suitable data.

An extrusion-based layered manufacturing machine may build up such a 3D object by extruding a build material, that may also be referred to interchangeably herein as a feedstock, filament, or media, from an extrusion head in a predetermined pattern onto a build surface, that may also be referred to interchangeably herein as a build plate, build platform, stage, base, or bed. The predetermined pattern may be determined based on the CAD model representing the 3D object, or any other suitable data.

The build material may be supplied to the extrusion head and the extrusion head may bring the build material to a flowable temperature to produce a flowable build material for deposition onto the build surface. A force of the incoming build material may cause extrusion of the flowable build material out from a nozzle of the extrusion head. The flowable build material may be extruded via the nozzle and adhere to a previously deposited build material with an adequate bond upon solidification.

A flow rate of the flowable build material being extruded from the nozzle may be a function of an advancement rate at which the build material is advanced to the extrusion head or pressure applied to advance the build material. The flow rate may be commanded by controlling the advancement rate via a controller that controls speed of a mechanism for advancing the build material or controls the pressure being applied to the build material. In addition to controlling the advancement rate, the controller may control movement of the extrusion head in a horizontal x, y plane, as well as movement of the build surface in a vertical z-direction. The controller may control the extrusion head movement relative to the 3D object being printed. For example, in some cases, the 3D object being printed may move in x and y, and the extrusion head may be stationary. By controlling such movements and the flow rate in synchrony, the flowable build material may be deposited onto the build surface layer-by-layer along tool paths that may be derived from the CAD model. The flowable build material being extruded may fuse to previously deposited build material and solidify to form the 3D object resembling the CAD model.

WO 03/051598 A1 shows an apparatus including an extrusion head which moves along a predetermined tool path at an extrusion head velocity. The extrusion head carries the liquifier. The liquifier receives a solid element of a modeling material, heats the modeling material, and outputs a flow of the modeling material at an output flow rate. A material advance mechanism is employed to supply the solid element of modeling material to the liquifier at an input rate which controls the output flow rate. In order to control the output flow rate, an extrusion head velocity profile is determined based on the tool path. The input rate of modeling material to the liquifier is then controlled to produce an output flow rate of modeling material from the liquifier that is proportional to a current extrusion head velocity corresponding to the extrusion head velocity profile.

SUMMARY

According to the invention, as disclosed in claim 1, a system for producing a three-dimensional (3D) object may comprise an extrusion assembly, the extrusion assembly including at least one actuator and an extrusion head, and a controller. The controller may be configured to control the at least one actuator to supply a build material to the extrusion head based on an input control value. The extrusion head may be configured to heat the build material within a melting zone of the extrusion head prior to extruding an output flow of the build material to produce the 3D object. The input control value may be a function of (i) a hydraulic capacitance and a hydraulic resistance, representing hydraulic capacitance values and hydraulic resistance values, respectively, associated with the build material, the extrusion assembly, or a combination thereof, at one or more locations of the extrusion assembly relative to the melting zone and (ii) a target output flow. The input control value may enable the output flow to match the target output flow.

The melting zone may be a region of the extrusion assembly within which the build material is deformed, irreversibly, due to an increase in temperature.

The input control value may be an input flow value or an input pressure value.

The hydraulic resistance values may each represent a respective change in pressure per change in flow rate of the build material at the one or more locations relative to the melting zone.

The hydraulic capacitance values may each represent a respective first amount of build material stored in the extrusion assembly per a second amount of pressure applied to the extrusion assembly at the one or more locations

relative to the melting zone.

The hydraulic capacitance values may include a first hydraulic capacitance value and a second hydraulic capacitance value. The first hydraulic capacitance value may represent a first hydraulic capacitance of the extrusion assembly and the build material in a solid form prior to an entrance of the melting zone. The second hydraulic capacitance value may represent a second hydraulic capacitance of the extrusion assembly and the build material in a melted or partially melted form within the melting zone.

The hydraulic resistance values may include a first resistance value, second resistance value, and third resistance value. The first resistance value may represent a first resistance of the build material in a first melted or partially melted form within the melting zone. The second resistance value may represent a second resistance of the build material in a second melted or partially melted form further within the melting zone and closer to an exit of the melting zone relative to the first resistance. The third resistance value may represent a third resistance of the build material in a third melted or partially melted form following the exit of the melting zone and outside of the extrusion head.

The hydraulic capacitance values and hydraulic resistance values may be specific to at least one of: the extrusion assembly, a wetted geometry of the extrusion assembly, a characteristic of the build material, an ambient temperature surrounding and external to the extrusion assembly, a temperature of the build material within the extrusion assembly, a length of the build material in a solid form between the at least one actuator and the melting zone to be extruded from the extrusion assembly, or a diameter of the build material to be extruded from the extrusion assembly.

The hydraulic capacitance values and the hydraulic resistance values may be associated with capacitive and resistive elements, respectively, in a hydraulic circuit model.

The capacitive elements may include a first capacitive element and a second capacitive element. The hydraulic capacitance values may include a first hydraulic capacitance value and a second hydraulic capacitance value associated with the first and second capacitive elements, respectively. The first capacitive element associated with the first hydraulic capacitance value may represent a first hydraulic capacitance of the extrusion assembly and the build material in a solid form prior to an entrance of the melting zone. The second capacitive element associated with the second hydraulic capacitance value may represent a second hydraulic capacitance of the extrusion assembly and the build material in a melted or partially melted form within the melting zone.

The resistive elements may include a first resistive element, second resistive element, and third resistive element. The hydraulic resistance values may include a first resistance value, second resistance value, and third resistance value associated with the first, second, and third resistive elements, respectively. The first resistive element associated with the first resistance value may represent a first resistance of the build material in a first melted or partially melted form within the melting zone. The second resistive element associated with the second resistance value may represent a second resistance of the build material in a second melted or partially melted form further within the melting zone and closer to an exit of the melting zone relative to the first resistance. The third resistive element associated with the third resistance value may represent a third resistance of the build material in a third melted or partially melted form following the exit of the melting zone and outside of the extrusion head.

The hydraulic circuit model may represent a description of a response of the build material to an imposed stress resulting in motion or to an imposed motion resulting in stress that may be represented by the capacitance values and the resistance values.

The response may be a linear or non-linear response of the build material in a solid, liquefied, or semi-solid form.

The hydraulic circuit model may represent a description of an interaction of the build material in a solid, liquefied, or semi-solid form with a geometry of the extrusion assembly. The interaction may produce storage of the build material in the geometry as a function of imposed motion, imposed stress, or a combination thereof. The hydraulic capacitance values may each represent a respective first amount of build material stored in the extrusion assembly per a second amount of pressure applied to the extrusion assembly at the one or more locations relative to the melting zone.

The hydraulic circuit model may represent a description of compliant interactions of mechanisms of the extrusion assembly with the build material in a solid, liquefied, or semi-solid form. The compliant interactions may result in storage of the build material. The hydraulic capacitance values may each represent a respective first amount of build material stored in the extrusion assembly per a second amount of pressure applied to the extrusion assembly at the one or more locations relative to the melting zone.

The hydraulic circuit model may represent a linear or a non-linear description of the extrusion assembly and the build material.

The hydraulic circuit model may be configured to account for non-Newtonian type characteristics of the build material.

The hydraulic circuit model may include a first capacitive element, second capacitive element, first resistive element, second resistive element, and third resistive element. The first capacitive element may be coupled to a controlled volume generator, the first resistive element, and an ambient pressure; the second capacitive element may be coupled to the first resistive element and the second resistive element. The first resistive element may be coupled to the controlled volume generator, the first capacitive element, the second capacitive element, and the second resistive element; the

second resistive element may be coupled to the first resistive element, second capacitive element, and third resistive element; and the third resistive element may be coupled to the second resistive element and the ambient pressure.

The first capacitive element may represent a first hydraulic capacitance of the extrusion assembly and the build material in a solid form prior to an entrance of the melting zone; the second capacitive element may represent a second hydraulic capacitance of the extrusion assembly and the build material within the melting zone; the first resistive element may represent a first resistance of the build material in a melted or partially melted form within the melting zone; the second resistive element may represent a second resistance of the build material in the melted or partially melted form further within the melting zone and closer to an exit of the melting zone relative to the first resistance; and the third resistive element may represent a third resistance of the build material in the melted or partially melted form following the exit of the melting zone.

The hydraulic resistance values may be determined based on measuring an efflux of mass or volume of the build material and a pressure within the extrusion assembly at a fixed set temperature and a forcing condition applied to the build material.

The hydraulic resistance values may be determined based on measuring a pressure within the extrusion assembly at a fixed set temperature and constant rates of influx of mass or volume of the build material.

The hydraulic capacitance values may be determined based on a measured line width of the build material produced along a build plate in response to a commanded variation of the output flow.

The system may further comprise an imaging system and the measured line width may be measured via the imaging system.

The hydraulic capacitance values may be determined prior to, during, or after printing of the 3D object.

The hydraulic resistance values may be determined prior to, during, or after printing of the 3D object.

The extrusion head may be configured to heat the build material within the melting zone via at least one heating element coupled to the extrusion head or via friction.

The friction may be: friction between the build material and an interior wall of the extrusion head, friction between the build material and an extrusion drive element configured to move within the extrusion head to extrude the build material, friction among constituents of the build material, or a combination thereof.

The controller may be further configured to receive a real-time measurement of the extrusion assembly and adjust the input control value based on the real-time measurement, the real-time measurement including a flow measurement, pressure measurement, printed line width measurement, or a combination thereof.

The controller may be further configured to receive a commanded profile for extruding the build material along a build surface and to modify the commanded profile based on a hydraulic circuit model of the extrusion assembly, application of the hydraulic capacitance values, the hydraulic resistance values, the target output flow to the hydraulic circuit model, and real-time data of the extrusion assembly.

The real-time data may include at least one of: an ambient temperature of the extrusion assembly, a temperature of the build material within the extrusion assembly, first length of the build material in solid form within the extrusion assembly, second length of the build material to be extruded from the extrusion assembly, or a diameter of the build material to be extruded from the extrusion assembly.

The controller may be further configured to receive at least one toolpath command for controlling movement of the extrusion assembly along the build plate and to adjust the at least one toolpath command based on the input control value.

The controller may be a local controller.

The controller may be a remote controller.

According to the invention, as disclosed in claim 10, a method for controlling extrusion of a build material for producing a three-dimensional (3D) object may comprise controlling at least one actuator of an extrusion assembly to supply the build material to an extrusion head of the extrusion assembly based on an input control value, heating the build material within a melting zone of the extrusion head prior to extruding an output flow of the build material to produce the 3D object. The input control value may be a function of (i) a hydraulic capacitance and a hydraulic resistance, representing hydraulic capacitance values and hydraulic resistance values, respectively, associated with the build material, an extrusion assembly, or a combination thereof at one or more locations of the extrusion assembly relative to a melting zone and (ii) a target output flow, the input control value enabling the output flow to match the target output flow.

Alternative method embodiments parallel those described above in connection with the example system embodiment.

According to yet another example embodiment, a system for producing a three-dimensional (3D) object may comprise means for controlling at least one actuator of an extrusion assembly to supply a build material to an extrusion head of the extrusion assembly based on an input control value and means for heating the build material within a melting zone of the extrusion head prior to extruding an output flow of the build material to produce the 3D object. The input control value may be a function of (i) a hydraulic capacitance and a hydraulic resistance, representing hydraulic capacitance values and hydraulic resistance values, respectively, associated with the build material, an extrusion assembly,

or a combination thereof at one or more locations of the extrusion assembly relative to a melting zone and (ii) a target output flow, the input control value enabling the output flow to match the target output flow.

It should be understood that example embodiments disclosed herein can be implemented in the form of a method, apparatus, system, or computer readable medium with program codes embodied thereon.

BRIEF DESCRIPTION OF THE DRAWINGS

The patent or application file contains at least one drawing executed in color. Copies of this patent or patent application publication with color drawing(s) will be provided by the Office upon request and payment of the necessary fee.

The foregoing will be apparent from the following more particular description of example embodiments of the invention, as illustrated in the accompanying drawings in which like reference characters refer to the same parts throughout the different views. The drawings are not necessarily to scale, emphasis instead being placed upon illustrating embodiments of the present invention.

FIG. 1 is a block diagram of an example embodiment of a system for producing a produce a three-dimensional (3D) object.

FIG. 2 is a block diagram of an example embodiment of a hydraulic circuit model superimposed on an extrusion assembly.

FIG. 3 is a circuit diagram of an example embodiment of another hydraulic circuit model.

FIG. 4 is a flow diagram of an example embodiment of a method for controlling extrusion of a build material for producing a three-dimensional (3D) object.

FIG. 5A is a graph of an example embodiment of over-extrusion.

FIG. 5B is a graph of log values of normalized line widths of line widths of the graph of FIG. 5A over time.

FIG. 5C is a graph of normalized line widths 505 of the line widths of the graph of FIG. 5A over time.

FIG. 6 is a block diagram of an example embodiment of a control system for a 3D printing system.

FIG. 7 is a block diagram of another example embodiment of a control system for a 3D printing system.

FIG. 8A is circuit diagram of an example embodiment of a non-linear model.

FIG. 8B is a graph of an example embodiment of the first pressure drop of FIG. 8A based on feedstock flow rate.

FIG. 8C is a graph of an example embodiment of the second pressure drop of FIG. 8A based on feedstock flow rate.

FIG. 9 is a graph of an example embodiment of normalized line widths over time.

FIG. 10 is a graph of an example embodiment of commanded step changes in line width that may be used to generate print lines of extrudate with rapidly varying width.

FIG. 11A is a plot of an example embodiment of printed geometry in response to the commanded step changes of FIG. 10.

FIG. 11B is a magnified view of a section of the printed geometry of FIG. 11A.

FIG. 12 is a graph of an example embodiment commanded profiles that may be employed to determine parameters of a hydraulic circuit model.

FIG. 13 is a graph of an example embodiment of line widths for three segments of extrudate.

FIG. 14A is a graph of an example embodiment of log of normalized line width over time for a stage speed of 10 mm/s.

FIG. 14B is a graph of an example embodiment of normalized line width over time for the stage speed of 10 mm/s.

FIG. 14C is a graph of an example embodiment of log of normalized line width over time for a stage speed of 20 mm/s.

FIG. 14D is a graph of an example embodiment of normalized line width over time for the stage speed of 20 mm/s.

FIG. 14E is a graph of an example embodiment of log of normalized line width over time for a stage speed of 30 mm/s.

FIG. 14F is a graph of an example embodiment of normalized line width over time for the stage speed of 30 mm/s.

FIG. 14G is a graph of an example embodiment of log of normalized line width over time for a stage speed of 40 mm/s.

FIG. 14H is a graph of an example embodiment of normalized line width over time for the stage speed of 40 mm/s.

FIG. 15A is a graph of an example embodiment of line width relative to position on a stage for a stage speed of 10 mm/s.

FIG. 15B is a graph of an example embodiment of line width deviation from an average over time for the stage speed of 10 mm/s.

FIG. 15C is a graph of an example embodiment of line width relative to position on a stage for a stage speed of 40 mm/s.

FIG. 15D is a graph of an example embodiment of line width deviation from an average over time for the stage speed of 40 mm/s.

FIG. 15E is block diagram of an example embodiment of a long transient.

FIG. 16A is a graph of an example embodiment of line width of extrudate relative to a position on a stage with a speed of 10 mm/s.

FIG. 16B is a graph of an example embodiment of line width of extrudate relative to a position on a stage with a speed of 20 mm/s.

FIG. 16C is a graph of an example embodiment of line width of extrudate relative to a position on a stage with a

speed of 30 mm/s.

FIG. 16D is a graph of an example embodiment of line width of extrudate relative to a position on a stage with a speed of 40 mm/s.

FIG. 17A is graph of an example embodiment of line width of extrudate at a position on a stage.

FIG. 17B is a graph of an example embodiment of normalized line width of FIG. 17A over time.

FIG. 17C is graph of another example embodiment of line width of extrudate at a position on a stage.

FIG. 17D is a graph of an example embodiment of normalized line width of FIG. 17C over time.

FIG. 17E is graph of another example embodiment of line width of extrudate at a position on a stage.

FIG. 17F is a graph of an example embodiment of normalized line width of FIG. 17E over time.

FIG. 17G is graph of another example embodiment of line width of extrudate at a position on a stage.

FIG. 17H is a graph of an example embodiment of normalized line width of FIG. 17G over time.

FIG. 18A is a graph of an example embodiment of a flow in command over time.

FIG. 18B is a graph of an example embodiment of flow out, computed, over time.

FIG. 18C is a graph of an example embodiment of total in/out flow over time.

FIG. 18D is a graph of another example embodiment of a flow in command over time.

FIG. 18E is a graph of another example embodiment of flow out, computed, over time.

FIG. 18F is a graph of another example embodiment of total in/out flow over time.

FIG. 18G is a graph of yet another example embodiment of a flow in command over time.

FIG. 18H is a graph of yet another example embodiment of flow out, computed, over time.

FIG. 181 is a graph of yet another example embodiment of total in/out flow over time.

FIG. 19A is a graph of yet another example embodiment of a flow in command over time.

FIG. 19B is a graph of yet another example embodiment of flow out, computed, over time.

FIG. 19C is a graph of yet another example embodiment of total in/out flow over time.

FIG. 20 is a block diagram of an example internal structure of a computer optionally within an embodiment disclosed herein.

## DETAILED DESCRIPTION

A description of example embodiments of the invention follows.

According to an example embodiment, a method for controlling extrusion of a build material from an extrusion assembly (also referred to interchangeably herein as an extruder) may produce an input flow rate of the build material which depends upon a desired (*i.e.,* target) flow rate of the build material at the nozzle and several resistance and capacitance parameters with values based on interaction of the build material to be extruded and a mechanical mechanism driving such extrusion.

The resistance and capacitance parameters may be parameters of a linear or non-linear description (also referred to interchangeably herein as a linear or non-linear hydraulic circuit model or linear or non-linear model) that may be configured to model, that is, simulate, an extrusion assembly and a build material being extruded via same. Such a linear or non-linear model may be used to determine an input control value for advancing the build material into the extrusion assembly in order to achieve a desired (*i.e.,* target) output flow of the build material from the extrusion assembly.

The linear or non-linear model may be formulated to produce a flow, displacement, or pressure (*i.e.,* force or strain) input control value or a pressure/force input control value that achieves a desired (*i.e.,* target) output flow for a particular extrusion assembly and build material over a given period of time. The input control value may be used to revise a commanded input flow, displacement, or pressure value to produce a revised input flow, displacement, or pressure value. By accounting for interaction between the build material and mechanics of the extrusion assembly, as well as an internal wetted geometry of the extrusion assembly, an example embodiment may enable an output flow of the build material that matches the desired output flow. By accounting for such interaction, over- and under-extrusion, of the build material relative to a target, that would otherwise be exhibited from a nozzle of the extrusion assembly, may be obviated.

Geometric dimensions of printed lines on a build surface used for three-dimensional (3D) printing of a 3D object may respond in a undesirable way to variations in speed and direction of stage motors (x- and y-direction) and an actuator of an extrusion assembly. Such undesirable behavior, that is, over- or under-extrusion of a build material used for the printing, may most clearly manifest in response to step changes in flow command, such as start and stop conditions, and in response to commands for producing corner features that may cause the extrusion assembly to dwell or accelerate rapidly during the printing. As such, an output flow of the build material being extruded from the extrusion assembly may not match a desired (*i.e.,* target) output flow. According to an example embodiment, control of at least one actuator supplying the build material to the extrusion head may be based on an input control value. The input control value may enable the output flow to match the target flow, allowing for improved extrusion control of the build material relative to

controlling the at least one actuator based on a commanded flow or commanded pressure that is not based on the input control value determined as disclosed herein. The input control value may be an input flow value or an input pressure value.

According to an example embodiment, a system, method, or apparatus may account for over- and under-extrusion of the build material (*i.e.,* feedstock or media) through a nozzle tip, such as the nozzle tip 248 of FIG. 2, disclosed further below. According to an example embodiment, compression of the media (*i.e.*, build material or feedstock) may be represented as pressure and mass storage elements in a hydraulic circuit model of an extrusion assembly that may be used to determine the input control value. The hydraulic circuit model is based on an understanding that a mechanical mechanism for forcing a solid form of the build material, such as a rod, and extrudate possesses a mechanical compliance. The hydraulic circuit model may be applied to systems in which the feedstock (which could be rod-like or coiled) is driven by smoothed, textured, or geared rollers and/or approaches where the rod is pushed along its axis using a kinematic mechanism. An example embodiment of a hydraulic circuit model identifies and quantifies both a non-Newtonian rheology of the partially melted or melted feedstock in the extrusion head (also referred to interchangeably herein as a hot-end) to indicate how pressure in the melted or partially melted feedstock is related to a desired extrusion speed of the media. An example embodiment of a hydraulic circuit model relates hydraulic resistance and mechanical capacitances and compliances in response to commanded flow signals to an actuator and determines a realized flow through an extrusion mechanism.

FIG. 1 is a block diagram 100 of an example embodiment of a system 102 for producing a three-dimensional (3D) object 104. The system comprises an extrusion assembly 106 that includes at least one actuator 108 and an extrusion head 110. The system 102 comprises a controller 112. The controller 112 is configured to control the at least one actuator 108 to supply a build material 114 to the extrusion head 110 based on an input control value 116. The extrusion head 110 is configured to heat the build material 114 within a melting zone 118 of the extrusion head 110 prior to extruding an output flow 120 of the build material 114 to produce the 3D object 104. The input control value 116 may be a function of (i) a hydraulic capacitance 22 and a hydraulic resistance 24, representing hydraulic capacitance values 122 and hydraulic resistance values 124, respectively, associated with the build material 114, the extrusion assembly 106, or a combination thereof at one or more locations of the extrusion assembly 106 relative to the melting zone 118 and (ii) a target output flow 126. The input control value 116 enables the output flow 120 to match the target output flow 126.

The hydraulic capacitance values 122 and hydraulic resistance values 124 associated with the build material 114, the extrusion assembly 106, or a combination thereof may be a function of environmental variables (not shown), such as an ambient temperature surrounding and external to the extrusion assembly 106, a temperature of the build material 114 within the extrusion assembly 106, or any other suitable environmental variables.

The extrusion head 110 is configured to receive the build material 114 and heat the build material 114 to a target extrusion temperature for the extrusion. It should be understood that the build material 114 may not truly "melt" since it may be a mixture of metal and polymer in which the metal doesn’t melt but the polymer does. The mixture may be any suitable mixture for printing the 3D object 104, such as ceramic in polymer, or any other suitable mixture. The polymer may include multiple species each with its own melting point. The target extrusion temperature may be such that not all polymers are in a molten state during extrusion. Such heating may be within the melting zone 118 that may be a region of the extrusion head 110, also referred to interchangeably herein as a hot-end, where the build material 114 actuated into the hot-end is heated and, therefore, starts to melt. The melting zone 118 may be a moveable region within which the build material 114 deforms irreversibly due to temperature change. The melting zone 118 may be moveable due to changes in temperature or rate of actuation within the extrusion assembly 106 or due to any other suitable condition.

The extrusion head 110 may be configured to heat the build material 114 within the melting zone 118 via at least one heating element (not shown) coupled to the extrusion head 110 or via friction. The friction may be: friction between the build material 114 and an interior wall (not shown) of the extrusion head 110, friction between the build material 114 and an extrusion drive element (not shown) configured to move within the extrusion head 110 to extrude the build material 114, friction among constituents (not shown) of the build material 114 (*i.e.,* viscous dissipation due to shear), or a combination thereof. The extrusion head 110 may be configured to heat the build material 114 via the at least one heating element, friction, or via any other suitable mechanism for heating the build material 114.

Molten build material may be deposited from a nozzle (not shown) of the extrusion head 110 in beads (not shown), or any in other suitable form, onto a planar base (not shown), such as the build plate 256 of FIG. 2, disclosed further below. The build material 114 may be a flexible filament, or any other suitable form of build material, such as a continuous solid material (*e.g.*, a filament on a spool), liquid material, semi-solid slurry, a series of rods fed sequentially, a solid granular material, or any other suitable material. A spool (not shown) may carry a coil of filament that may be mounted on a spindle (not shown).

The least one actuator 108 may be any suitable mechanism for advancing the build material 114 into the extrusion head 110. For example, the at least one actuator 108 may comprise a pair of feed rollers (not shown) driven by a motor (not shown) that advances the build material 114 into the extrusion head 110 at a controlled rate. Alternatively, the at least one actuator 108 may comprise a controlling mechanism such as a finger (not shown) for pushing the build

material along an axis of the build material 114 and down into the extrusion head 110. The at least one actuator 108 may comprise a valve (not shown) that controls release of a pressure from a pressure source (not shown) that forces the build material 114 into the extrusion head 110. The at least one actuator 108 may include a plurality of actuators (not shown). For example, a first actuator (not shown) of the plurality of actuators may perform coarse control of advancement for the build material 114, whereas a second actuator (not shown), of the plurality of actuators, may perform fine and fast control relative to control performed by the first actuator.

The extrusion head 110 may be pressurized by "pumping" the build material 114 into the extrusion head 110 by the at least one actuator 108. The build material 114 may act as a piston. The pressurization may impel a molten form of the build material 114 out of the nozzle (not shown). The output flow 120 of the build material 114 may be controlled by adjusting the at least one actuator 108. For example, the controller 112 may be configured to adjust a speed of rotation of the pair of feed rollers (not shown) or to adjust the actuator 108 in any other suitable way. The controller 112 may be configured to control the output flow 120 of the build material 114 by driving control signal(s) 128 to the at least one actuator 108. For example, the controller 112 may drive the control signal(s) 128 that may control a motor (not shown) configured to drive a feed roller (not shown) of the at least one actuator 108, or may drive any other suitable control signal that causes the at least one actuator 108 to advance the build material 114.

The extrusion head 110 may be driven along tool paths (not shown) in a horizontal x-y plane by an x-y translator (not shown) that may receive drive signals from the controller 112 in accordance with design data derived from a computer aided design (CAD) model (not shown) that represents the 3D object 104. As the extrusion head 110 is translated in the x-y plane, molten build material may be controllably dispensed from the nozzle (not shown) layer-by-layer onto the planar base (not shown). After each layer is dispensed, the planar base may be lowered a predetermined increment along a vertical z-axis by a z-axis translator (not shown), which may also receive drive signals from the controller 112. The dispensed build material may fuse and solidify to form the 3D object 104 resembling the CAD model. The build material 114 may be used to build a support structure (not shown) that may be dispensed in a like fashion in coordination with the dispensing of build material 114 used to build up the 3D object 104, to support portions of the 3D object 104 as it is under construction.

Fluidic and mechanical capacitances and non-linear resistances of the extrusion assembly 106 may produce a flow of the build material 114 from the extrusion assembly 106 that is different from a commanded flow. Generally, a response (or flow) from the extrusion assembly 106 may lag behind a target flow that is commanded on the actuator 108 moving the feedstock. Physically, this lag results from a storage of displacement in un-melted feedstock which is compressed by a force required to drive the flowable feedstock that may be in a semi-solid or fluid form through the extrusion assembly 106 in addition to the mechanical compliance of the extruder assembly 106 which may be both be loaded (in the case of increasing force on the feedstock and) and unloaded (in the case of decreasing force on the feedstock and flow). The mechanical compliance may be a deflection in the extrusion assembly, or any other suitable mechanical compliance.

According to an example embodiment, a hydraulic circuit model, such as the hydraulic circuit models of FIG. 2 and FIG. 3, disclosed further below, may be configured to account for non-Newtonian type characteristics of the build material 114. For a case of a non-Newtonian material, a combination of a capacitance and non-linear resistance may produce a response that decays faster than an exponential at short times, and slower than exponential at long times. Such a response may be due to the non-Newtonian (shear thinning) nature of a particle-laden polymeric feedstock. Particle-laden polymeric feedstock materials are less resistive to flow, that is, such particle-laden polymeric feedstock materials have a lower viscosity when a shear rate imposed upon the material is large. Conversely, as the shear rate decreases (as occurs when the pressure is nearly all relieved) the particle-laden polymeric feedstock becomes increasingly resistive, and longer times are required for the built-up pressure to dissipate resulting in prolonged print errors.

To mitigate such effects, an example embodiment may relieve and preemptively prime pressure on the build material 114 during changes in the commanded flow rate. An example embodiment may consider non-linearity and capacitance of the build material 114 in solid form, instead of considering the build material 114 as having constant resistance (Newtonian) and accounting for capacitance in the melt only.

An example embodiment may model the extrusion assembly 106 and produce optimal (*i.e.,* target) profiles to actuate the extrusion head 110. A model of the extrusion assembly may employ an electrical analogy such as disclosed with regard to FIG. 2 and FIG. 3, further below. While resistances may be shown as linear elements, an example embodiment may generalize such resistances to a non-linear case owing to the non-Newtonian characteristics of the build material 114 in a melted or partially melted form, as disclosed below.

An example embodiment may take into account the non-Newtonian nature of the build material 114 in the melted or partially melted form. An example embodiment may consider the compression of the build material 114 in solid form as producing capacitive effects as opposed to compressibility of the build material 114 in a melted or partially melted form or the thermal expansion of the media, that is, the build material 114.

An example embodiment of a method for controlling extrusion of the build material 114 may produce the input control value 116, that may be a revised input flow rate or revised input pressure, that is revised relative to an initially

commanded input flow rate or pressure, and which may be based on the target output flow rate 126 at a nozzle (not shown) of the extruder assembly 106, and the hydraulic resistance values 122 and the hydraulic capacitance values 124 which may account for interaction of the build material 114 to be extruded and a mechanical mechanism driving extrusion. The hydraulic resistance values 122 and the hydraulic capacitance values 124 may depend upon an interaction between the build material 114 and the mechanical mechanism, as well as an internal wetted geometry of the extrusion assembly, that is, a geometry of the extrusion assembly 106 that comes into contact with the build material 114 as it passes through the extrusion assembly 106.

As disclosed above, the controller 112 may be configured to control the at least one actuator 108 to supply the build material 114 to the extrusion head 110 based on the input control value 116. The input control value 116 may be a function of (i) the hydraulic capacitance values 122 and hydraulic resistance values 124 associated with the build material 114, the extrusion assembly 106, or a combination thereof at the one or more locations relative to the melting zone 118 and (ii) the target output flow 126. According to an example embodiment, the hydraulic resistance values 124 may each represent a respective change in pressure per change in flow rate of the build material 114 at the one or more locations relative to the melting zone 118. The hydraulic capacitance values 122 may each represent a respective first amount of build material stored in the extrusion assembly 106 per a second amount of pressure applied to the extrusion assembly 106 at the one or more locations relative to the melting zone 118. Such hydraulic resistance values 124 and hydraulic capacitance values 122 may be associated with capacitive and resistive elements, such as the first hydraulic capacitance C1 260, second hydraulic capacitance C2 262, first resistance R1 244, second resistance R2 246, and third resistance R3 250, disclosed below with reference to the hydraulic circuit model 205 of FIG. 2. The first hydraulic capacitance C1 260 and the second hydraulic capacitance C2 262 are storage elements that may be inactive for constant flow of the build material 114 through the extrusion assembly 206.

FIG. 2 is a block diagram 200 of an example embodiment of a hydraulic circuit model 205 superimposed on an extrusion assembly 206, such as the extrusion assembly 106 of FIG. 1, disclosed above. The hydraulic circuit model 205 includes a controlled volume generator 268, first resistance R1 244, second resistance R2 246, third resistance R3 250, first hydraulic capacitance C1 260, second hydraulic capacitance C2 262, an ambient pressure 242. The hydraulic circuit model 205 may be employed by a processor (not shown) to determine an input flow $Q_{in}$ 266 of a build material 214 supplied to the extrusion assembly 206 to achieve a target output flow $Q_{out}$ 226 of the build material 214, as disclosed further below. The input flow $Q_{in}$ 266 that is determined may serve as the input control value 116 of FIG. 1, disclosed above. It should be understood that the hydraulic circuit model 205 may be drawn as an equivalent circuit (not shown) with the hydraulic capacitance 22 and the hydraulic resistance 24, that is, with a single capacitance and a single resistance in the equivalent circuit.

The extrusion assembly 206 includes at least one actuator 208 and an extrusion head 210. In the example embodiment of FIG. 2, the extrusion head 210 is coupled to heat blocks 230a and 230b for heating the build material 214; however, as disclosed above, the extrusion head 210 may be configured to heat the build material 214 in any suitable way. The extrusion head 210 may be coupled to cooling fins 232a and 232b that focus air flow 234a and 234b to ensure a solid form of the build material 214 entering the extrusion head 210. However, it should be understood that maintaining the build material 214 at a particular temperature to ensure a solid form of the material entering the extrusion head 210 may be performed in any suitable way.

A controller (not shown), such as the controller 112 of FIG. 1, disclosed above, may be configured to control the at least one actuator 208 to supply the build material 214 to the extrusion head 210 based on an input control value (not shown), such as the input control value 116 of FIG. 1, disclosed above. The input control value may be a function of (i) the hydraulic capacitance values and hydraulic resistance values, such as the first resistance R1 244, second resistance R2 246, and third resistance R3 250, and the first hydraulic capacitance C1 260 and second hydraulic capacitance C2 262, respectively, that are associated with the build material 214, the extrusion assembly 210, or a combination thereof at the one or more locations relative to the melting zone 218 and (ii) the target output flow $Q_{out}$ 226. According to an example embodiment, the hydraulic resistance values may each represent a respective change in pressure per change in flow rate of the build material 214 at the one or more locations relative to the melting zone 218, such as the locations at a first node 236, second node 238, and third node 240 of the hydraulic circuit model 205.

For example, the hydraulic resistance values may represent a respective change in pressure per change in flow rate of the build material 214 between the first node 236 and the second node 238, the second node 238 and the third node 240, and the third node 240 and an ambient pressure 242, where the first node 236 is at an entrance of the melting zone 218, the second node 238 is within the melting zone 218, and the third node 240 is at an exit of the melting zone 218.

The hydraulic resistance values may include a first resistance value, a second resistance value, and a third resistance value. The first resistance value may represent the first resistance R1 244 of the build material 214 that may be in a first melted or partially melted form within the melting zone 218. The second resistance value may represent the second resistance R2 246 of the build material 214 that may be in a second melted or partially melted form further within the melting zone 218 and closer, relative to the first resistance R1 244, to an exit, such as the nozzle tip 248, of the

melting zone 218.

The third resistance value may represent the third resistance R3 250 of the build material 214 that may be in a third melted or partially melted form following the exit of the melting zone 218 and outside of the extrusion head 210. In FIG. 2, $V_e$ 252 represents a velocity of an extrudate of the build material 214 following the exit of the melting zone 218 via the nozzle tip 248 and $V_b$ 254 represents a velocity of a build plate 256 (also referred to interchangeably herein as a bed or stage) that may be a planar surface, as disclosed above, where $V_b$ 254 represents the velocity of the build plate 256 relate to the nozzle tip 248 of a nozzle 258 of the extrusion head 210.

The hydraulic capacitance values may each represent a respective first amount of build material 214 stored in the extrusion assembly 206 per a second amount of pressure applied to the extrusion assembly 206 at the one or more locations relative to the melting zone 218. The hydraulic capacitance values may include a first hydraulic capacitance value and a second hydraulic capacitance value. The first hydraulic capacitance value may represent the first hydraulic capacitance C1 260 of the extrusion assembly 206 and the build material 214 in a solid form prior to an entrance of the melting zone 218. The second hydraulic capacitance value may represent the second hydraulic capacitance C2 262 of the extrusion assembly 206 and the build material 214 in a melted or partially melted form within the melting zone 218.

The hydraulic resistance values may be determined based on measuring a pressure within the extrusion assembly 206 at a fixed set temperature and constant rates of influx of mass or volume of the build material 214, such as by measuring the pressure at the first node 236, second node 238, or third node 240, or a combination thereof. The hydraulic resistance values may be determined based on measuring an efflux of mass or volume of the build material 214 and a pressure within the extrusion assembly 206 at a fixed set temperature and forcing condition applied to the build material 214, such as by measuring the efflux and pressure at the first node 236, second node 238, or third node 240, or a combination thereof. Further disclosure related to determining such values is disclosed, further below.

The hydraulic capacitance values may be determined based on a measured line width of the extrudate 264 of the build material 214 produced along the build plate 256 in response to a commanded variation of the output flow $Q_{out}$ 220. Further disclosure related to determining such values is disclosed, further below.

Turning back to FIG. 1, the system 102 may further comprise an imaging system (not shown) and the measured line width may be measured via the imaging system. For example, one or more cameras may be coupled to the extrusion head 110 for capturing images used to determine such line width, or any other suitable imaging system or other system may be employed for determining same. The system 102 may further comprise at least one pressure sensor (not shown) employed for determining pressure measurements to enable determination of pressure.

The hydraulic capacitance values 122 and the hydraulic resistance values 124 may be determined prior to, during, or after printing of the 3D object 104. For example, such hydraulic capacitance or resistance values may be determined during a calibration phase that transpires before or after printing of the 3D object 104. Alternatively, such hydraulic capacitance or resistance values may be determined concurrent with printing of the 3D object 104. Alternatively, such hydraulic capacitance or resistance values may be static values. As such, it should be understood that the hydraulic capacitance values 122 and the hydraulic resistance values 124 may be predetermined values that are static over time or may be values that are dynamic, varying over time with respect to real-time data of the extrusion assembly 106, and that such dynamic hydraulic capacitance and resistance values may be computed, dynamically, with respect to the printing of the 3D object 104.

The hydraulic capacitance values 122 and the hydraulic resistance values 124 may be specific to at least one of: the extrusion assembly 106, a wetted geometry of the extrusion assembly 106, a characteristic of the build material 114, an ambient temperature surrounding and external to the extrusion assembly 106, a temperature of the build material 114 within the extrusion assembly 106, a length of the build material 114 in a solid form between the at least one actuator 108 and an entrance to the melting zone 118, or a diameter of the build material 114 in solid form.

The characteristic of the build material 114 may be a feedstock dimension, viscosity, Young's modulus, or any other suitable characteristic. The wetted geometry may be a geometry of the extrusion assembly 106 that comes into contact with the build material 114 as it passes through the extrusion assembly 106

The hydraulic capacitance values 122 and the hydraulic resistance values 124 may be associated with capacitive and resistive elements, such as the first hydraulic capacitance C1 260, second hydraulic capacitance C2 262, first resistance R1 244, second resistance R2 246, and third resistance R3 250, disclosed above with reference to the hydraulic circuit model 205 of FIG. 2. Turning back to FIG. 2, the hydraulic circuit model 205 may represent a description of a response of the build material 214 to an imposed stress resulting in motion or to an imposed motion resulting in stress that may be represented by the capacitance values and the resistance values. The response may be a non-linear or linear response of the build material 214 in a solid, liquefied, or semi-solid form.

For example, according to an example embodiment, a non-linear description may be employed to compute the input flow $Q_{in}$ 266, that may serve as the input control value 116 of FIG. 1, as disclosed above, and the input flow $Q_{in}$ 266, that is, $Q_i(t)$, may be computed as:

$$Q_i(t) = (C_1 + C_2)\frac{d}{dt}\{Q_0^n R_2 + Q_0^m R_3\} + R_1 C_1 \frac{d}{dt}\left\{\left[C_2 \frac{d}{dt}\{Q_0^n R_2 + Q_0^m R_3\} + Q_0\right]^p\right\} + Q_0(t)$$

In the above non-linear description, $Q_0$ is the target output flow 226 that may be any time-dependent output flow that is the desired (*i.e.*, target) output flow. The parameters $C_1$ and $C_2$ are values of hydraulic capacitances of the extrusion mechanism and solid media, and the melted media and the wetted extruder geometry, respectively, such as values of the first hydraulic capacitance C1 260 and second hydraulic capacitance C2 262 of the hydraulic circuit model 205, disclosed above. The parameters *n, m, p,* and $R_1$, $R_2$, and $R_3$ contribute to a description of a pressure drop generated by a transport of the build material 214 through the extrusion assembly 206. The various R's may be referred to as hydraulic resistances, or just resistances, as disclosed above, where $R_1$, $R_2$, and $R_3$ correspond to values of the first resistance R1 244, second resistance R2 246, and third resistance R3 250, respectively, of the hydraulic circuit model 205.

The build material 214 may be approximated using a power-law rheological model. Using the power-law rheological model, the pressure drop in response to flow for each of three sections in the nozzle (a partially melted zone, a fully melted zone, and a region beyond the nozzle exit) may be given by:

$$\Delta p_i = Q_i^x R_i$$

It should be understood that the partially melted zone may be a zone leading into the melting zone 218 in which the build material 214 is in a partially melted form. The fully melted zone may be a zone within the melting zone 218 in which the build material 214 is further melted, and the region beyond the nozzle exit, that is, beyond the nozzle tip 248, that may be just beyond an exit of the melting zone 218.

In the non-linear description disclosed above, the pressure drop is a non-linear function of the flow denoted with the exponent x. The pressure drop depends linearly upon the resistance $R_i$ (where i = 1, 2, or 3), which contains attributes of the extruder geometry, such as lengths, radii, or any other suitable geometrical attribute, as well as material constants, such as a viscosity of the build material, or any other suitable material constant. The viscosity depends upon a temperature to which the build material 214 is subjected, along with an appropriate rheological description of the non-linear material. For the non-linear description disclosed above, a power-law description of the rheology may be employed:

$$\eta = k\dot{\gamma}^{n-1}$$

In this expression, both *k* (the consistency) and *n* (the power-law index) may vary with temperature. In practice, *k* may be much more temperature-dependent than *n.* The consistency may also be dependent upon a volume fraction of solids in the build material, although this may typically be held constant.

The hydraulic capacitances $C_1$ and $C_2$, disclosed above, may relate the amount of melted or partially melted build material 214 stored in the extrusion assembly 206 per an amount of pressure applied to the extrusion assembly, via:

$$C = \frac{dV}{dp}.$$

Such capacitances may depend on all properties of the extrusion assembly 206 and the build material 214 being extruded, in solid, semi-solid, and molten form. Properties upon which the capacitances depend may include, but are not limited to, an environmental temperature, rheological and mechanical characteristics of the extrusion material, a temperature of the extrusion material, a wetted geometry of the extrusion assembly, an actuation system of the extrusion assembly 206, as well as a geometry, orientation, or characteristics of the feedstock, that is, the build material 214 to be extruded.

As disclosed above, the hydraulic circuit model 205 may represent a non-linear or a linear description of the extrusion assembly 206 and the build material 214. A linear description is disclosed below with regard to the hydraulic circuit model 305 of FIG. 3.

FIG. 3 is a circuit diagram 300 of an another example embodiment of a hydraulic circuit model 305. The hydraulic circuit model 305 includes first, second, and third resistive elements, namely, $R_{mush}$ 344, $R_{melt}$ 346, and $R_{orf}$ 350, respectively, that correspond to the first resistance R1 244, second resistance R2 246, and third resistance R3 250, respectively, of FIG. 2, disclosed above. The hydraulic circuit model 305 further includes first and second capacitive

elements, namely $C_{rod}$ 360 and $C_{mush}$ 362, respectively, that correspond to the first hydraulic capacitance C1 260 and second hydraulic capacitance C2 262, respectively, of FIG. 2, disclosed above. The first hydraulic capacitance $C_{rod}$ 360 and the second hydraulic capacitance $C_{mush}$ 362 are storage elements that may be inactive for constant flow of the build material through the extrusion assembly.

The hydraulic circuit model 305 may represent a linear or a non-linear description of the extrusion assembly 206 and the build material 214 of FIG. 2, disclosed above. An example embodiment of such a linear description may be:

$$\frac{d^2 Q_{out}}{dt^2} + A\frac{dQ_{out}}{dt} + B(Q_{out} - Q_{in}) = 0$$

in which:

Q's, t, A, and B are dimensionless

By $Q_{in}$ @ steady state

By $R_{mush}C_{rod}$

and

$$A = \frac{R_{melt}}{R_{mush}}\left[1 + \frac{C_{mush}}{C_{rod}}\left(1 + \frac{1}{\frac{R_{melt}}{R_{mush}} + \frac{R_{orf}}{R_{mush}}}\right)\right]$$

$$B = \frac{\frac{R_{melt}}{R_{mush}}\frac{C_{rod}}{C_{mush}}}{1 + \frac{R_{orf}}{R_{mush}}}$$

Based on the above linear description, the input flow $Q_{in}$ 366 of the build material 214 to achieve a target output flow $Q_{out}$ 326 of the build material 214 may be determined by:

$$Q_{in} = Q_{out} + \frac{A}{B}\frac{dQ_{out}}{dt} + \frac{1}{B}\frac{d^2 Q_{out}}{dt^2}$$

An input control value, such as a value of the input flow $Q_{in}$ 366, may be employed by a controller, such as the controller 112 of FIG. 1, disclosed above, to control at least one actuator, such as the at least one actuator 108 of FIG. 1 or the at least one actuator 208 of FIG. 2, such that the input flow of the build material is $Q_{in}$ 366, enabling the target output flow $Q_{out}$ 326 to be achieved, and obviating over- or under-extrusion of the build material 214 otherwise exhibited.

In the hydraulic circuit model 305, the first capacitive element $C_{rod}$ 360 is coupled to a controlled volume generator 368, the first resistive element $R_{mush}$ 344, and an ambient pressure 342. The second capacitive element $C_{mush}$ 362 is coupled to the first resistive element $R_{mush}$ 344 and the second resistive element $R_{melt}$ 346. The first resistive element $R_{mush}$ 344 is coupled to the controlled volume generator 368, first capacitive element $C_{rod}$ 360, second capacitive element $C_{mush}$ 362, and the second resistive element $R_{melt}$ 346. The second resistive element $R_{melt}$ 346 is coupled to the first resistive element $R_{mush}$ 344, second capacitive element $C_{mush}$ 362, and the third resistive element $R_{orf}$ 350. The third resistive element $R_{orf}$ 350 is coupled to the second resistive element $R_{melt}$ 346 and the ambient pressure 342. The ambient pressure 342 may be an atmospheric pressure.

The first capacitive element $C_{rod}$ 360 may represent a first hydraulic capacitance of an extrusion assembly (not

shown) and build material (not shown), in a solid form prior to an entrance of the melting zone 318. The second capacitive element $C_{mush}$ 362 may represent a second hydraulic capacitance of the extrusion assembly and the build material within the melting zone 318. The first resistive element $R_{mush}$ 344 may represent a first resistance of the build material in a melted or partially melted form within the melting zone 318. The second resistive element $R_{melt}$ 346 may represent a second resistance of the build material in the melted or partially melted form further within the melting zone 318 and closer to an exit of the melting zone 318 relative to the first resistance $R_{mush}$ 344. The third resistive element $R_{orf}$ 350 may represent a third resistance of the build material in the melted or partially melted form following exit from the melting zone 318.

The hydraulic circuit model 305 represents a description of an interaction of the build material in a solid, liquefied, or semi-solid form with a geometry of the extrusion assembly, such as the extrusion assemblies 106 and 206 of FIG. 1 and FIG. 2, respectively, as disclosed above, the interaction producing storage of the build material in the geometry as a function of imposed motion, imposed stress, or a combination thereof. Hydraulic capacitance values of the capacitive elements $C_{rod}$ 360 and $C_{mush}$ 362 may each represent a respective first amount of build material stored in the extrusion assembly per a second amount of pressure applied to the extrusion assembly at the one or more locations relative to the melting zone 318, such as the locations at a first node 336, second node 338, and third node 340 of the hydraulic circuit model 305. The resistive elements $R_{mush}$ 344, $R_{melt}$ 346, and $R_{orf}$ 350 may have respective resistance values that each represent a respective change in pressure per change in flow rate of build material (not shown) at the one or more locations relative to a melting zone 318, such as the locations at the first node 336, second node 338, and third node 340 of the hydraulic circuit model 305.

FIG. 4 is a flow diagram 400 of an example embodiment of a method for controlling extrusion of a build material for producing a three-dimensional (3D) object (402). The method begins (404) and controls at least one actuator of an extrusion assembly to supply the build material to an extrusion head of the extrusion assembly based on an input control value (406). The method heats the build material within a melting zone of the extrusion head prior to extruding an output flow of the build material to produce the 3D object, the input control value being a function of (i) a hydraulic capacitance and a hydraulic resistance, representing hydraulic capacitance values and hydraulic resistance values, respectively, associated with the build material, an extrusion assembly, or a combination thereof at one or more locations of the extruder assembly relative to a melting zone and (ii) a target output flow, the input control value enabling the output flow to match the target output flow (408) and the method thereafter ends (410), in the example embodiment.

Turning back to FIG. 2, the hydraulic circuit model 205 may represent a description of compliant interactions of mechanisms of the extrusion assembly 206 with the build material 214 in a solid, liquefied, or semi-solid form. The compliant interactions, such as deflection of the extrusion assembly 206, or any other suitable compliant interaction, may result in storage of the build material 214.

According to an example embodiment, a commanded setpoint, such as a commanded input pressure or commanded input flow of the build material 214 may take into account idiosyncrasies of the extruder assembly 206 and the build material 214. The commanded setpoint may be a revised commanded setpoint that adjusts for an error in the resultant output flow 220 due to such idiosyncrasies. Such idiosyncrasies may be accounted for via example embodiments of linear or non-linear hydraulic circuit models disclosed herein. According to an example embodiment, such hydraulic circuit models may be used with concurrent measurement of pressure (at any node in the hydraulic circuit diagram) or flow (at any node in the hydraulic circuit diagram).

For a case in which pressure and/or force measurements are made, the hydraulic circuit model may predict an amount of displacement with which to drive the at least one actuator 208 on the extrusion head 210. For a case in which flow is monitored, the hydraulic circuit model may predict a pressure (or force or torque or motor current based on a wetted geometry of the extrusion assembly 206) that may be needed in order to produce the target output flow 226. As a small error between the target output flow 226 and a resulting flow (*i.e.,* the output flow $Q_{out}$ 220), or small error between a desired pressure and a resulting pressure may result, an example embodiment may employ the hydraulic circuit model to achieve, *e.g.,* 95% of the desired flow or desired pressure where a residual error, such as 5%, that is an error between the desired flow and resulting flow, or desired pressure and resulting pressure, may be neutralized by a controller, such as the controller 112 of FIG. 1, disclosed above. It should be understood that values of 95% and 5% are for example purposes and may be any suitable values.

Turning back to FIG. 1, the controller 112 may be further configured to receive a real-time measurement of the extrusion assembly 106 and adjust the input control value 116 based on the real-time measurement. The real-time measurement may include a flow measurement, pressure measurement, or printed line width measurement, or a combination thereof. Based on such a real-time measurement, the controller 112 may neutralize the residual error, as disclosed above.

According to an example embodiment, the controller 112 may be further configured to receive a commanded profile for extruding the build material 114 along a build surface, such as the build plate 256 of FIG. 2, disclosed above, and modify the commanded profile based on a hydraulic circuit model of the extrusion assembly 106, application of the hydraulic capacitance values 122 and the hydraulic resistance values 124 to the hydraulic circuit model, the target output

flow 126, and real-time data and/or non-real time data of the extrusion assembly 106.

The real-time data may include at least one of: an ambient temperature of the extrusion assembly 106, a temperature of the build material 114 within the extrusion assembly 106, a first length of the build material 114 in solid form within the extrusion assembly 106, a second length of the build material 114 to be extruded from the extrusion assembly 106, or a diameter of the build material 114 to be extruded from the extrusion assembly 106. The non-real time data may include an extruder identifier of the extruder assembly 106 that identifies a type of the extruder assembly 106 or a build material identifier that identifies a type of the build material 114 or characteristic related thereto.

According to an example embodiment, fitted parameters, such as the hydraulic capacitance values 122 and the hydraulic resistance values 124, may be fit to a linear or non-linear model as a function of one or more parameters, such as the ambient temperature of the extrusion assembly 106, the temperature of the build material 114 within the extrusion assembly 106, the first length of the build material 114 in solid form within the extrusion assembly, the second length of the build material 114 to be extruded from the extrusion assembly 106, or the diameter of the build material 114 to be extruded from the extrusion assembly 106. The hydraulic capacitance values 122 and the hydraulic resistance values 124 may be determined based on same and may be stored in a memory and retrieved based on same via an association between the hydraulic capacitance values 122 and the hydraulic resistance values 124 and the one or more parameters.

For example, the hydraulic capacitance values 122 and the hydraulic resistance values 124 may be stored in a Look-Up Table (LUT) stored in a memory that may be indexed via a representation of the one or more parameters to retrieve hydraulic capacitance and resistance values determined based on same. As such, the controller 112 may access the hydraulic capacitance values 122 and the resistance values 124 based on the one or more parameters and apply the hydraulic capacitance values 122 and the resistance values 124 to a hydraulic circuit model, such as the hydraulic circuit models 205 and 305 of FIG. 2 and FIG. 3, disclosed above, along with the target output flow 126 in order to determine the input control value 116 that may be an input flow or pressure value for achieving a target output flow or pressure. It should be understood that the LUT is an example for providing a mechanism for storing and retrieving the hydraulic capacitance values 122 and the resistance values 124; however, such hydraulic capacitance and resistance values may be retrieved in any suitable manner based on the one or more parameters.

The one or more parameters may include non-real time and real-time parameters and may represent non-real time and real-time data. For example, the one or more parameters may include the non-real time data such as a characteristic of the build material, identifier of a specific extruder assembly, or any other suitable non-real time data, whereas the real-time data may include a temperature within the extrusion head, an ambient temperature of the extrusion assembly, or any other real-time data.

According to an example embodiment, the controller 112 may be further configured to receive at least one toolpath command for controlling movement of the extrusion assembly 106 along the build plate and to adjust the at least one toolpath command based on the input control value 116. For example, a computer-aided design (CAD) model of the 3D object 104 may be sliced by a slicer (not shown) and toolpath commands may be derived therefrom. The controller 112 may receive such toolpath commands and modify one or more of the toolpath commands based on applying the fitted parameters to the linear or non-linear models disclosed herein to determine the input control value 116 for achieving the target output flow 126 of the build material 114. It should be understood that the controller 112 may be a distributed controller and that the input control value 116 may be determined locally by the controller 112 or may be received from a remote controller (not shown).

Due to idiosyncrasies of the extrusion assembly 106 and build material 114, such as the capacitance of the build material 114, the extrusion assembly 106, or a combination thereof, over- or under-extrusion of the build material 106 may result unexpectedly in response to a toolpath command or a series thereof. A toolpath command may be any suitable command that results in motion of the extrusion assembly 106 relative to the 3D object 104 being printed, extrudate flow from the extrusion head 110, or a combination thereof. However, based on monitored real-time data of a three-dimensional (3D) printer and known non-real time characteristics of the build material 114 and extrusion assembly 106, fitted parameters, such as the hydraulic capacitance values 122 and the hydraulic resistance values 124 disclosed above, may be retrieved or computed and applied to a hydraulic circuit model, such as the hydraulic circuit models 205 and 305 of FIG. 2 and FIG. 3, respectively, with linear or non-linear descriptions, as disclosed herein. As such, the input control value 116 may be determined and the input control value 116 may be an input flow rate or input pressure, as disclosed above. Based on the input control value determined, the toolpath commands may be modified such that the target output flow 126 may be achieved, obviating the over- or under-extrusion that would otherwise result.

According to an example embodiment, the controller 112 may be a local controller. For example, the controller 112 may be co-located with the extrusion assembly 106. Alternatively, the controller 112 may be a remote controller that is remotely located relative to the extrusion assembly 106 and configured to receive real-time data, such as a length of the build material 114 prior to entering the extrusion head 110, a temperature within or ambient to the extrusion assembly 106, or any other suitable real-time data of the build material 114 or extrusion assembly 106, via a remote connection with the 3D printer including the extrusion assembly 106 in real or near-real time. The remote connection

may be a wired or wire-less connection, or any other suitable connection for communicating the real-time data from the 3D printer including the extrusion assembly 106 to the local or remote controller 112.

Example embodiments disclosed below relate to determination of fitted parameters, such as the hydraulic capacitance values 122 and the hydraulic resistance values 124, employed by example embodiments of a hydraulic circuit model, such as the hydraulic circuit models 205 and 305 or FIG. 2 and FIG. 3, respectively.

Determination of the parameters

As disclosed in the non-linear description disclosed above with reference to FIG. 2, there are 8 constants employed and such constants may be determined for each combination of build material 114 and type of extrusion assembly 106. These constants are the three power-law indices (*m*, *n*, *q*) and their corresponding hydraulic resistances (*i.e.,* $R_1$, $R_2$, and $R_3$), and hydraulic capacitances (*i.e.*, $C_1$ and $C_2$).

To determine values of such constants, two custom-built instruments were employed and results regarding same are disclosed. In a first device, termed mMFI, the efflux of mass and the pressure within the hot-end at a fixed set temperature and forcing condition were measured. That is, a fixed force was applied on the feedstock and extrusion was monitored while holding all other system parameters constant. Since the force applied to the feedstock was commanded, that is, known, and varied, and since the pressure within the melt was measured, a pressure required to extrude at various rates of flow out of the nozzle tip may be determined. In this way, *m, n,* $R_1$, and $R_2$ may be determined. Such terms may be determined under constant forcing such that all pressure and extrusion rate measurements may be made at steady-state.

Utilizing a second custom-built instrument, the terms *p,* $R_3$, $C_1$, $C_2$ were determined. On this second custom-built instrument, the displacement of the feedstock was commanded and a cross-section of a printed line along with a pressure within the melting zone (at the same location as on the mMFI instrument) was measured. To determine *p* and $R_3$, the nozzle was configured to be at a desired height from the bed. Then, a fixed rate of displacement was applied to the feedstock and the pressure required to actuate the flow was measured. This resistance may also be a function of the bed speed, although bed speed may be ignored as this effect in the hydraulic circuit model is anticipated to have an effect that has a small contribution to the overall resistance of the build material through the hot-end.

Now that the terms *p, m, n,* $R_1$, $R_2$, and $R_3$ have been determined, the hydraulic capacitances $C_1$ and $C_2$ may be characterized utilizing the hydraulic circuit model. Since the hydraulic capacitances relate an amount of volume stored per change in pressure over time, a transient test was employed. In this transient test, a line may be printed such that a width of the printed line is varied at some point along the printed line. This could include a step change, ramp, sinusoid, or any shape resulting from a variation of the flow along the toolpath for the printed line. A step change may be useful as it may be simplest to resolve. Once the line is printed with a varying feature, a width of the line may be characterized as a function of position using a suitable sensor. Since both the measured line output and the commanded line input may be commanded as a function of time, a prediction of the line output may be obtained from the hydraulic circuit model for any values of $C_1$ and $C_2$, and a minimization may be performed to determine the values of $C_1$ and $C_2$ which best predict an observed profile given an input command. The penalty function for this optimization may be a normalized error between a line width profile predicted by the hydraulic circuit model and a line width observed in such an experiment.

Following determination of the terms *p, m, n,* $R_1$, $R_2$, and $R_3$, the hydraulic circuit model may be deployed on a 3D printer to account for interactions between the extrusion assembly mechanics and properties of the feedstock employed.

FIG. 5A is a graph 500 of an example embodiment of over-extrusion. As disclosed above, due to idiosyncrasies of the extrusion assembly and build material, such as the capacitance of a build material, extrusion assembly, or a combination thereof, over- or under-extrusion of the build material may result unexpectedly in response to a toolpath command or a series thereof. The graph 500 includes a plot 506 of measured line width 502 of extrudate of build material produced at a position 504 along a build plate in response to a commanded variation of input flow resulting in a commanded variation of output flow. The plot 506 illustrates a response to a change in commanded flow associated with step change from 500 $\mu$m to 300 $\mu$m in line width. Instead of measuring a sharp change in the line width 502 from 500 $\mu$m to 300 $\mu$m, the plot 506 illustrates a gradual change from 500 $\mu$m to 300 $\mu$m, due to over-extrusion.

FIG. 5B is a graph 510 of log values of normalized line widths 503 of the line widths 502 of the graph 500 of FIG. 5A over time 508. The graph 510 illustrates exponential decay 507 due to over-extrusion instead of a straight line.

FIG. 5C is a graph 520 of normalized line widths 505 of the line widths 502 of the graph 500 of FIG. 5A over time 508. The graph 520 includes a fitted curve 509 that may be used to determine, via integration, the amount that is over extruded.

FIG. 6 is a block diagram of an example embodiment of a control system 600 for a three-dimensional (3D) printing system (not shown). The control system 600 may include a slicer 601 that is configured to slice a 3D CAD model 603 of a 3D object into two-dimensional slices that may be used to generate a toolpath in firmware 607 for extruding the build material to fabricate the 3D object. The control system 600 may employ a linear model 605a or non-linear model

605b and may be configured to apply 610 fitted parameters 609 to the linear model 605a or non-linear model 605b and use real-time data 613 from the 3D printing system to modify the toolpath in firmware 607 and generate 611 commands to a motion system based on same. The real-time data 613 may include any suitable real-time data of the 3D printing system and may include, for example, a temperature of the extrusion assembly, an ambient temperature, a length of the build material, etc. The motion system may control an extrusion assembly of the 3D printing system to fabricate the 3D object based on the commands to the motion system.

The fitted parameters 609 may be generated, as disclosed above, based on pressure sensing information 617 that may include a viscosity value employed by the linear model 605a or a power-law constant employed by the non-linear model 605b. The pressure sensing information 617 may be generated by a pressure sensing unit 615 that includes pressure sensors and may be configured to derive the pressure sensing information 617 based on measurements of the pressure sensors and extruder information, such as material type of the build material, temperature of the build material, and a wetted geometry of the extrusion assembly that excludes the actuator. The fitted parameters 609 may be further based on step change transient information 619 collected from an extrusion fixture 621.

FIG. 7 is a block diagram of another example embodiment of a control system 700 for a 3D printing system (not shown). In the example embodiment of FIG. 7, portions of the control system 700 are performed by a remote controller 712 and by a local controller 732. The remote controller 712 is not co-located with the 3D printing system and drives control signals, such as the control signal(s) 128 of FIG. 1, indirectly, via the local controller 732. The remote controller 732 is communicatively coupled to the local controller 732 via an suitable communication path that may be a wired or wireless communication path. The local controller 732 may communicate information 733 about the 3D printing system that may be real-time data. The information 733 may include any suitable real-time data of the 3D printing system and may include, for example, a temperature of the extrusion assembly, an ambient temperature, a length of the build material, etc.

The remote controller 712 may include a slicer 701 that is configured to slice a 3D CAD model 703 of a 3D object (not shown) into two-dimensional slices that may be used to generate a toolpath in firmware 707 for extruding the build material to fabricate the 3D object. The remote controller 312 may employ a linear model 705a or non-linear model 705b and may be configured to apply 710 fitted parameters 709 to the linear model 705a or non-linear model 705b and use real-time data 713 that includes the information 733 received from the 3D printing system to modify the toolpath in firmware 707 and send the modified toolpath information 723 to the local controller 732.

The local controller 732 may include firmware 725 that may interpret the modified toolpath information 723 and generate 711 commands to a motion system based on same. The motion system may control an extrusion assembly of the 3D printing system to fabricate the 3D object based on the commands to the motion system.

The fitted parameters 709 may be generated, as disclosed above, based on pressure sensing information 717 that may include a viscosity value employed by the linear model 705a or a power-law constant employed by the non-linear model 705b. The pressure sensing information 717 may be generated by a pressure sensing unit 715 that includes pressure sensors and may be configured to derive the pressure sensing information 717 based on measurements of the pressure sensors and extruder information, such as material type of the build material, temperature of the build material, and a wetted geometry of the extrusion assembly that excludes the actuator. The fitted parameters 709 may be further based on step change transient information 719 collected from an extrusion fixture 721.

FIG. 8A is circuit diagram of an example embodiment of a non-linear model 805. A pressure sensing unit (not shown), such as the pressure sensing units 615 and 715 of FIG. 6 and FIG. 7, respectively, may employ the non-linear model 805 to determine the pressure sensing information 717 that may include a viscosity value employed by the linear model 705a or a power-law constant employed by the non-linear model 705b.

As disclosed above, the build material may be approximated using a power-law rheological model. Using the power-law rheological model, the pressure drop in response to flow for each of three sections in the nozzle (a partially melted zone, a fully melted zone, and a region beyond the nozzle exit) may be given by:

$$\Delta P = RQ^n$$

In the example embodiment of FIG. 8, pressure sensing maybe based on interrogating the pressure under a force-controlled experiment and the build material may be heated to a suitable temperature, such as 190C. An example embodiment of such a forced controlled experiment was performed to sense a first pressure drop $\Delta P_{mush}$ 841 across $R_{mush}$ 344 and a second pressure drop $\Delta P_{melt}$ 843 across $R_{melt}$ 346, and $R_{orf}$ 350. In the forced controlled experiment, a controlled pressure generator 868 was configured to apply constant pressure to the feedstock. As such, the storage elements $C_{rod}$ 860 and $C_{mush}$ 862 were inactive due to constant flow of the feedstock. Results from such a forced controlled experiment are illustrated in FIG. 8B and FIG. 8C, disclosed below.

FIG. 8B is a graph 855 of an example embodiment of the first pressure drop 841 of FIG. 8A based on feedstock flow rate $Q$ 852. Data from the graph 855 yields the following relationship for the first pressure drop $\Delta P_{mush}$ 841: $\Delta P_{mush}$=

$1.298 \times 10^7 Q^{0.192}$ . As such, $R_{mush}$ 844 was determined to be 1.298, in the example embodiment.

FIG. 8C is a graph 860 of an example embodiment of the second pressure drop 843 of FIG. 8A based on feedstock flow rate $Q$ 852. Data from the graph 860 yields the following relationship for the second pressure drop $\Delta P_{melt}$ 843: $\Delta P_{melt}$=$1.926 \times 10^9 Q^{0.406}$. As such, $R_{melt}$ 846 in combination with $R_{orf}$ 850 was determined to be 1.926, in the example embodiment.

FIG. 9 is a graph 900 of an example embodiment of normalized line widths 905 over time 908. The graph 900 includes a plot 971 of normalized line widths of extrudate with fit from a non-linear model 805 of FIG. 8A, disclosed above and another plot 973 of normalized line widths of extrudate without fit from the non-linear model. As disclosed above with regard to FIG. 8B and 8C, resistance of the non-linear model 805 were measured from a pressure sensor. Capacitances of the non-linear model 805 were determined by measuring a response of the extruder assembly and build material to a step change in line width. The step change was fitted with the non-linear model 805 to determine the capacitances. Such measured and fitted parameters were used with the non-linear model 805 to compute modified profiles to the extrusion assembly employed to extrude the extrudate which was measured to generate the plot 971.

FIG. 10 is a graph 1000 of an example embodiment of commanded step changes in line width that may be used to generate print lines of extrudate with rapidly varying width. Such commanded step changes may be used to determine capacitances of a model, as disclosed above.

FIG. 11A is a plot of an example embodiment of printed geometry 1100 in response to the commanded step changes of FIG. 10, disclosed above. The printed geometry 1100 includes a first printed line 1173 that is based on an open loop method that does not modify the extrusion profile based on a model. The printed geometry 1100 includes a second printed line 1171 that is based on a control method that modifies the extrusion profile based on a model, such as the non-linear model 805 of FIG. 8A, disclosed above. As illustrated in the example embodiment, the first printed line 1173 does not produce any discernible variation in the printed geometry due to over-extrusion whereas the second printed line 1171 produces a discernible variation. A section 1175 is magnified and illustrated in FIG. 11B, disclosed below.

FIG. 11B is a magnified view of the section 1175 of the printed geometry 1100 of FIG. 11A, disclosed above. By employing example embodiments disclosed herein, deviation between commanded line width and observed line width may be minimized. As illustrated the magnified view, the second printed line 1171 has discernible variation based on commanded line width whereas the first printed line 1173 does not.

FIG. 12 is a graph 1200 of an example embodiment commanded profiles that may be employed to determine parameters of a hydraulic circuit model, as disclosed above. Such commanded profiles may be repeated multiple times, for example, 4x @ 10, 20, 30, and 40 mms/s stage speed.

FIG. 13 is a graph 1300 of an example embodiment of line widths for three segments of extrudate. Data of the graph 1300 was obtained by stepping up/down a flow command for a 3mm feedstock. Data of the graph illustrates tracking line width as a function of position. The graph 1300 illustrates slow convergence to target line width and responses that appear to behave, initially, as a resistor-capacitor (RC) circuit.

FIG. 14A is a graph of an example embodiment of log of normalized line width over time for a stage speed of 10 mm/s.

FIG. 14B is a graph of an example embodiment of normalized line width over time for the stage speed of 10 mm/s.

FIG. 14C is a graph of an example embodiment of log of normalized line width over time for a stage speed of 20 mm/s.

FIG. 14D is a graph of an example embodiment of normalized line width over time for the stage speed of 20 mm/s.

FIG. 14E is a graph of an example embodiment of log of normalized line width over time for a stage speed of 30 mm/s.

FIG. 14F is a graph of an example embodiment of normalized line width over time for the stage speed of 30 mm/s.

FIG. 14G is a graph of an example embodiment of log of normalized line width over time for a stage speed of 40 mm/s.

FIG. 14H is a graph of an example embodiment of normalized line width over time for the stage speed of 40 mm/s.

As illustrated by FIGS. 14A-H, a shape of the curves appears invariant to the stage speed.

FIG. 15A is a graph of an example embodiment of line width relative to position on a stage for a stage speed of 10 mm/s.

FIG. 15B is a graph of an example embodiment of line width deviation from an average over time for the stage speed of 10 mm/s.

FIG. 15C is a graph of an example embodiment of line width relative to position on a stage for a stage speed of 40 mm/s.

FIG. 15D is a graph of an example embodiment of line width deviation from an average over time for the stage speed of 40 mm/s.

As illustrated in FIGS. 15A-D, line widths at $Q_0$ are due to storage of the media above the hotend and noise decreases with increase in extrusion and stage speed. A long transient clouds measurement of an equilibrium line width.

FIG. 15E is block diagram illustrating an example embodiment of the long transient 1582.

FIG. 16A is a graph of an example embodiment of line width of extrudate relative to a position on a stage with a speed of 10 mm/s.

FIG. 16B is a graph of an example embodiment of line width of extrudate relative to a position on a stage with a speed of 20 mm/s.

FIG. 16C is a graph of an example embodiment of line width of extrudate relative to a position on a stage with a speed of 30 mm/s.

FIG. 16D is a graph of an example embodiment of line width of extrudate relative to a position on a stage with a speed of 40 mm/s.

As illustrated in FIGS. 16A-D, the average high width of Seg 1 is fairly consistent. The height achieved in Seg 2 is inconsistent with the Seg 1 value, suggesting a long transient. Except for the 10 mm/s stage speed traces of FIG. 16A, the hotend is primed a the high flow before the first step (*i.e*., Seg 1).

FIG. 17A is graph of an example embodiment of line width of extrudate at a position on a stage.

FIG. 17B is a graph of an example embodiment of normalized line width of FIG. 17A over time.

FIG. 17C is graph of another example embodiment of line width of extrudate at a position on a stage.

FIG. 17D is a graph of an example embodiment of normalized line width of FIG. 17C over time.

FIG. 17E is graph of another example embodiment of line width of extrudate at a position on a stage.

FIG. 17F is a graph of an example embodiment of normalized line width of FIG. 17E over time.

FIG. 17G is graph of another example embodiment of line width of extrudate at a position on a stage.

FIG. 17H is a graph of an example embodiment of normalized line width of FIG. 17G over time.

As illustrated by the graphs of FIGS. 17A-H, a range of observed widths resulted from a multiple step experiment.

FIG. 18A is a graph of an example embodiment of a flow in command over time.

FIG. 18B is a graph of an example embodiment of flow out, computed, over time.

FIG. 18C is a graph of an example embodiment of total in/out flow over time.

FIG. 18D is a graph of another example embodiment of a flow in command over time.

FIG. 18E is a graph of another example embodiment of flow out, computed, over time.

FIG. 18F is a graph of another example embodiment of total in/out flow over time.

FIG. 18G is a graph of another example embodiment of a flow in command over time.

FIG. 18H is a graph of another example embodiment of flow out, computed, over time.

FIG. 181 is a graph of another example embodiment of total in/out flow over time.

In the example embodiments of FIGS. 18A-I, an input function for the flow in command is a step function. However, any suitable function may be applied. For example, just a few neighboring input commands in time may be applied, such as five, ten, or fifteen. FIGS. 19A-C, disclosed below, employ a ramp function.

FIG. 19A is a graph of yet another example embodiment of a flow in command over time.

FIG. 19B is a graph of yet another example embodiment of flow out, computed, over time.

FIG. 19C is a graph of yet another example embodiment of total in/out flow over time.

FIG. 20 is a block diagram of an example of the internal structure of a computer 2000 in which various embodiments of the present disclosure may be implemented. The computer 2000 contains a system bus 2002, where a bus is a set of hardware lines used for data transfer among the components of a computer or processing system. The system bus 2002 is essentially a shared conduit that connects different elements of a computer system (*e.g*., processor, disk storage, memory, input/output ports, network ports, *etc*.) that enables the transfer of information between the elements. Coupled to the system bus 2002 is an I/O device interface 2004 for connecting various input and output devices (*e.g*., keyboard, mouse, displays, printers, speakers, *etc*.) to the computer 2000. A network interface 2006 allows the computer 2000 to connect to various other devices attached to a network. Memory 2008 provides volatile or non-volatile storage for computer software instructions 2010 and data 2012 that may be used to implement embodiments of the present disclosure, where the volatile and non-volatile memories are examples of non-transitory media. Disk storage 2014 provides non-volatile storage for computer software instructions 2010 and data 2012 that may be used to implement embodiments of the present disclosure. A central processor unit 2018 is also coupled to the system bus 2002 and provides for the execution of computer instructions.

Further example embodiments disclosed herein may be configured using a computer program product; for example, controls may be programmed in software for implementing example embodiments. Further example embodiments may include a non-transitory computer-readable medium containing instructions that may be executed by a processor, and, when loaded and executed, cause the processor to complete methods described herein. It should be understood that elements of the block and flow diagrams may be implemented in software or hardware, such as via one or more arrangements of circuitry, disclosed above, or equivalents thereof, firmware, a combination thereof, or other similar implementation determined in the future. In addition, the elements of the block and flow diagrams described herein may be combined or divided in any manner in software, hardware, or firmware. If implemented in software, the software may be written in any language that can support the example embodiments disclosed herein. The software may be stored in any form of computer readable medium, such as random access memory (RAM), read only memory

(ROM), compact disk read-only memory (CD-ROM), and so forth. In operation, a general purpose or application-specific processor or processing core loads and executes software in a manner well understood in the art. It should be understood further that the block and flow diagrams may include more or fewer elements, be arranged or oriented differently, or be represented differently. It should be understood that implementation may dictate the block, flow, and/or network diagrams and the number of block and flow diagrams illustrating the execution of embodiments disclosed herein.

The teachings of all patents, published applications and references cited herein are incorporated by reference in their entirety.

## Claims

1. A system (102) for producing a three-dimensional (3D) object (104), the system (102) comprising:

    an extrusion assembly (106) including at least one actuator (108) and an extrusion head (110); and
    a controller (112), the controller (112) configured to control the at least one actuator (108) to supply a build material (114) to the extrusion head (110) based on an input control value, the extrusion head (110) configured to heat the build material (114) within a melting zone (118) of the extrusion head (110) prior to extruding an output flow (120) of the build material (114) to produce the 3D object (104), **characterized in that** the input control value is a function of (i) a hydraulic capacitance (22) and a hydraulic resistance (24), representing hydraulic capacitance values (122) and hydraulic resistance values (124), respectively, associated with the build material (114), the extrusion assembly (106), or a combination thereof at one or more locations of the extrusion assembly (106) relative to the melting zone (118) and (ii) a target output flow (126), the input control value enabling the output flow (120) to match the target output flow (126).

2. The system (102) of Claim 1, wherein the melting zone (118) is a region of the extrusion assembly (106) within which the build material (114) is deformed, irreversibly, due to an increase in temperature, and/or wherein the input control value is an input flow value or an input pressure value.

3. The system (102) of any of Claims 1 or 2, wherein the hydraulic resistance values (124) each represent a respective change in pressure per change in flow rate of the build material (114) at the one or more locations relative to the melting zone (118), and/or wherein the hydraulic capacitance values (122) each represent a respective first amount of build material (114) stored in the extrusion assembly (106) per a second amount of pressure applied to the extrusion assembly (106) at the one or more locations relative to the melting zone (118).

4. The system (102) of any of Claims 1-3, wherein the hydraulic capacitance values (122) include a first hydraulic capacitance value (122) and a second hydraulic capacitance value (122), the first hydraulic capacitance value (122) representing a first hydraulic capacitance (22) of the extrusion assembly (106) and the build material (114) in a solid form prior to an entrance of the melting zone (118), the second hydraulic capacitance value (122) representing a second hydraulic capacitance (22) of the extrusion assembly (106) and the build material (114) in a melted or partially melted form within the melting zone (118), and/or wherein the hydraulic resistance values (124) include a first resistance value (124), a second resistance value (124), and a third resistance value (124), the first resistance value (124) representing a first resistance (24) of the build material (114) in a first melted or partially melted form within the melting zone (118), the second resistance value (124) representing a second resistance (24) of the build material (114) in a second melted or partially melted form further within the melting zone (118) and closer to an exit of the melting zone (118) relative to the first resistance (24), the third resistance value (124) representing a third resistance (24) of the build material (114) in a third melted or partially melted form following the exit of the melting zone (118) and outside of the extrusion head (110), and/or wherein the hydraulic capacitance values (122) and hydraulic resistance values (124) are specific to at least one of: the extrusion assembly (106), a wetted geometry of the extrusion assembly (106), a characteristic of the build material (114), an ambient temperature surrounding and external to the extrusion assembly (106), a temperature of the build material (114) within the extrusion assembly (106), a length of the build material (114) in a solid form between the at least one actuator (108) and the melting zone (118) to be extruded from the extrusion assembly (106), or a diameter of the build material (114) to be extruded from the extrusion assembly (106).

5. The system (102) of any of Claims 1-4, wherein the hydraulic capacitance values (122) and the hydraulic resistance values (124) are associated with capacitive and resistive elements, respectively, in a hydraulic circuit model, and/or wherein the hydraulic resistance values (124) are determined based on measuring an efflux of mass or volume of the build material (114) and a pressure within the extrusion assembly (106) at a fixed set temperature and forcing

condition applied to the build material (114), and/or wherein the hydraulic resistance values (124) are determined based on measuring a pressure within the extrusion assembly (106) at a fixed set temperature and constant rates of influx of mass or volume of the build material (114), and/or
wherein the hydraulic capacitance values (122) are determined based on a measured line width of the build material (114) produced along a build plate in response to a commanded variation of the output flow (120).

**6.** The system (102) of any of Claims 1-5, wherein the hydraulic capacitance values (122), and/or the hydraulic resistance values (124), are determined prior to, during, or after printing of the or a 3D object (104).

**7.** The system (102) of any of Claims 1-6, wherein the extrusion head (110) is configured to heat the build material (114) within the melting zone (118) via at least one heating element coupled to the extrusion head (110) or via friction.

**8.** The system (102) of any of Claims 1-7, wherein the controller (112) is further configured to receive a real-time measurement of the extrusion assembly (106) and adjust the input control value based on the real-time measurement, the real-time measurement including a flow measurement, pressure measurement, printed line width measurement, or a combination thereof, and/or wherein the controller (112) is further configured to receive a commanded profile for extruding the build material (114) along a build surface and to modify the commanded profile based on a hydraulic circuit model of the extrusion assembly (106), application of the hydraulic capacitance values (122), the hydraulic resistance values (124), and the target output flow to the hydraulic circuit model, and real-time data of the extrusion assembly (106), and/or wherein the controller (112) is further configured to receive at least one toolpath command for controlling movement of the extrusion assembly (106) along the build plate and to adjust the at least one toolpath command based on the input control value.

**9.** The system (102) of any of Claims 1-8, wherein the controller (112) is a local controller, or wherein the controller (112) is a remote controller.

**10.** A method (400) for controlling extrusion of a build material (114) for producing a three-dimensional (3D) object (104), the method comprising:

controlling (406) at least one actuator (108) of an extrusion assembly (106) to supply the build material (114) to an extrusion head (110) of the extrusion assembly (106) based on an input control value; and
heating (408) the build material (114) within a melting zone of the extrusion head (110) prior to extruding an output flow (120) of the build material (114) to produce the 3D object (104), **characterized in that** the input control value is
a function of (i) a hydraulic capacitance (122) and a hydraulic resistance (124), representing hydraulic capacitance values (22) and hydraulic resistance values (24), respectively, associated with the build material (114), an extrusion assembly (106), or a combination thereof at one or more locations of the extrusion assembly (106) relative to a melting zone (118) and (ii) a target output flow, the input control value enabling the output flow (120) to match the target output flow.

**11.** The method (400) of Claim 10, further comprising deforming the build material (114), irreversibly, within the melting zone (118) by increasing a temperature of the build material (114), and/or further comprising setting the input control value to an input flow value or an input pressure value.

**12.** The method (400) of any of Claims 10 or 11, further comprising representing each of the hydraulic resistance values (124) by a respective change in pressure per change in flow rate of the build material (114) at a respective location relative to the melting zone (118), and/or further comprising representing each of the hydraulic capacitance values (122) by a respective first amount of build material (114) stored in the extrusion assembly (106) per a second amount of pressure applied to the extrusion assembly (106) at a respective location relative to the melting zone (118).

**13.** The method (400) of any of Claims 10-12, further comprising configuring the hydraulic capacitance values (122) to include a first hydraulic capacitance value (122) and a second hydraulic capacitance value (122), the first hydraulic capacitance value (122) representing a first hydraulic capacitance (22) of the extrusion assembly (106) and the build material (114) in a solid form prior to an entrance of the melting zone (118), the second hydraulic capacitance value (122) representing a second hydraulic capacitance (22) of the extrusion assembly (106) and the build material (114) in a melted or partially melted form within the melting zone (118), and/or further comprising configuring the hydraulic resistance values (124) to include a first resistance value (124), a second resistance value (124), and a third resistance value (124), the first resistance value (124) representing a first resistance (24) of the build material

(114) in a first melted or partially melted form within the melting zone (118), the second resistance value (124) representing a second resistance (24) of the build material (114) in a second melted or partially melted form further within the melting zone (118) and closer to an exit of the melting zone (118) relative to the first resistance (24), the third resistance value (124) representing a third resistance (24) of the build material (114) in a third melted or partially melted form following the exit of the melting zone (118) and outside of the extrusion head (110), and/or wherein the hydraulic capacitance values (122) and hydraulic resistance values (124) are specific to at least one of: the extrusion assembly (106), a wetted geometry of the extrusion assembly (106), a characteristic of the build material (114), an ambient temperature surrounding and external to the extrusion assembly (106), a temperature of the build material (114) within the extrusion assembly (106), a length of the build material (114) in a solid form between the at least one actuator (108) and the melting zone (118) to be extruded from the extrusion assembly (106), or a diameter of the build material (114) to be extruded from the extrusion assembly (106).

**14.** The method (400) of any of Claims 10-13, further comprising associating the hydraulic capacitance values (122) and the hydraulic resistance values (124) with capacitive and resistive elements, respectively, in a hydraulic circuit model, and/or further comprising determining the hydraulic resistance values (124) based on measuring an efflux of mass or volume of the build material (114) and a pressure within the extrusion assembly (106) at a fixed set temperature and forcing condition applied to the build material (114), and/or further comprising determining the hydraulic resistance values (124) based on measuring a pressure within the extrusion assembly (106) at a fixed set temperature and constant rates of influx of mass or volume of the build material (114), and/or further comprising determining the hydraulic capacitance values (122) based on a measured line width of the build material (114) produced along a build plate in response to a commanded variation of the output flow (120).

**15.** The method (400) of any of Claims 10-14, further comprising determining the hydraulic capacitance values (122), and/or the hydraulic resistance values (124), prior to, during, or after printing of the or a 3D object (104).

## Patentansprüche

**1.** System (102) zur Herstellung eines dreidimensionalen (3D) Objekts (104), wobei das System (102) Folgendes umfasst:

eine Extrusionsbaugruppe (106) mit mindestens einem Aktuator (108) und einem Extrusionskopf (110); und eine Steuerung (112), wobei die Steuerung (112) zum Steuern des mindestens einen Aktuators (108) konfiguriert ist, um dem Extrusionskopf (110) ein Aufbaumaterial (114) auf der Basis eines Eingangssteuerwerts zuzuführen, wobei der Extrusionskopf (110) zum Erhitzen des Aufbaumaterials (114) innerhalb einer Schmelzzone (118) des Extrusionskopfs (110) vor dem Extrudieren eines Ausgangsstroms (120) des Aufbaumaterials (114) konfiguriert ist, um das 3D-Objekt (104) zu erzeugen, **dadurch gekennzeichnet, dass** der Eingangssteuerwert eine Funktion (i) einer hydraulischen Kapazität (22) und eines hydraulischen Widerstands (24) ist, die hydraulische Kapazitätswerte (122) bzw. hydraulische Widerstandswerte (124) darstellen, die mit dem Aufbaumaterial (114), der Extrusionsbaugruppe (106) oder einer Kombination davon an einer oder mehreren Stellen der Extrusionsbaugruppe (106) relativ zur Schmelzzone (118) assoziiert sind, und (ii) eines Zielausgangsstroms (126), wobei es der Eingangssteuerwert ermöglicht, dass der Ausgangsstrom (120) dem Zielausgangsstrom (126) entspricht.

**2.** System (102) nach Anspruch 1, wobei die Schmelzzone (118) ein Bereich der Extrusionsbaugruppe (106) ist, innerhalb dessen das Aufbaumaterial (114) aufgrund eines Temperaturanstiegs irreversibel verformt wird, und/oder wobei der Eingangssteuerwert ein Eingangsströmungswert oder ein Eingangsdruckwert ist.

**3.** System (102) nach Anspruch 1 oder 2, wobei die hydraulischen Widerstandswerte (124) jeweils eine jeweilige Druckänderung pro Änderung der Strömungsrate des Aufbaumaterials (114) an den ein oder mehreren Stellen relativ zur Schmelzzone (118) darstellen, und/oder wobei die hydraulischen Kapazitätswerte (122) jeweils eine jeweilige erste Menge an in der Extrusionsbaugruppe (106) gespeichertem Aufbaumaterial (114) pro einer zweiten Menge an auf die Extrusionsbaugruppe (106) an den ein oder mehreren Stellen relativ zur Schmelzzone (118) ausgeübtem Druck darstellen.

**4.** System (102) nach einem der Ansprüche 1-3, wobei die hydraulischen Kapazitätswerte (122) einen ersten hydraulischen Kapazitätswert (122) und einen zweiten hydraulischen Kapazitätswert (122) einschließen, wobei der erste hydraulische Kapazitätswert (122) eine erste hydraulische Kapazität (22) der Extrusionsbaugruppe (106) und des

Aufbaumaterials (114) in fester Form vor einem Eintritt in die Schmelzzone (118) darstellt, wobei der zweite hydraulische Kapazitätswert (122) eine zweite hydraulische Kapazität (22) der Extrusionsbaugruppe (106) und des Aufbaumaterials (114) in einer geschmolzenen oder teilweise geschmolzenen Form innerhalb der Schmelzzone (118) darstellt, und/oder wobei die hydraulischen Widerstandswerte (124) einen ersten Widerstandswert (124), einen zweiten Widerstandswert (124) und einen dritten Widerstandswert (124) einschließen, wobei der erste Widerstandswert (124) einen ersten Widerstand (24) des Aufbaumaterials (114) in einer ersten geschmolzenen oder teilweise geschmolzenen Form innerhalb der Schmelzzone (118) darstellt, der zweite Widerstandswert (124) einen zweiten Widerstand (24) des Aufbaumaterials (114) in einer zweiten geschmolzenen oder teilweise geschmolzenen Form weiter innerhalb der Schmelzzone (118) und näher an einem Ausgang der Schmelzzone (118) relativ zum ersten Widerstand (24) darstellt, der dritte Widerstandswert (124) einen dritten Widerstand (24) des Aufbaumaterials (114) in einer dritten geschmolzenen oder teilweise geschmolzenen Form nach dem Austritt aus der Schmelzzone (118) und außerhalb des Extrusionskopfes (110) darstellt, und/oder wobei die hydraulischen Kapazitätswerte (122) und hydraulischen Widerstandswerte (124) spezifisch sind für mindestens eines von: der Extrusionsbaugruppe (106), einer benetzten Geometrie der Extrusionsbaugruppe (106), einer Eigenschaft des Aufbaumaterials (114), einer Umgebungstemperatur um die und außerhalb der Extrusionsbaugruppe (106), einer Temperatur des Aufbaumaterials (114) innerhalb der Extrusionsbaugruppe (106), einer Länge des Aufbaumaterials (114) in fester Form zwischen dem mindestens einen Aktuator (108) und der Schmelzzone (118), das aus der Extrusionsbaugruppe (106) extrudiert werden soll, oder einem Durchmesser des Aufbaumaterials (114), das aus der Extrusionsbaugruppe (106) extrudiert werden soll.

**5.** System (102) nach einem der Ansprüche 1-4, wobei die hydraulischen Kapazitätswerte (122) und die hydraulischen Widerstandswerte (124) mit kapazitiven bzw. resistiven Elementen in einem Hydraulikkreismodell assoziiert sind, und/oder wobei die hydraulischen Widerstandswerte (124) auf der Basis der Messung eines Massen- oder Volumenausflusses des Aufbaumaterials (114) und eines Drucks innerhalb der Extrusionsbaugruppe (106) bei einer fest eingestellten Temperatur und einer auf das Aufbaumaterial (114) angewandten Kraftbedingung bestimmt werden, und/oder wobei die hydraulischen Widerstandswerte (124) auf der Basis der Messung eines Drucks innerhalb der Extrusionsbaugruppe (106) bei einer fest eingestellten Temperatur und konstanten Massen- oder Volumenzuflussraten des Aufbaumaterials (114) bestimmt werden, und/oder
wobei die hydraulischen Kapazitätswerte (122) auf der Basis einer gemessenen Linienbreite des Aufbaumaterials (114) bestimmt werden, die entlang einer Aufbauplatte als Reaktion auf eine befohlene Änderung des Ausgangsflusses (120) erzeugt wird.

**6.** System (102) nach einem der Ansprüche 1-5, wobei die hydraulischen Kapazitätswerte (122) und/oder die hydraulischen Widerstandswerte (124) vor, während oder nach dem Drucken des oder eines 3D-Objekts (104) bestimmt werden.

**7.** System (102) nach einem der Ansprüche 1-6, wobei der Extrusionskopf (110) zum Erhitzen des Aufbaumaterials (114) innerhalb der Schmelzzone (118) über mindestens ein mit dem Extrusionskopf (110) gekoppeltes Heizelement oder über Reibung konfiguriert ist.

**8.** System (102) nach einem der Ansprüche 1-7, wobei die Steuerung (112) ferner zum Empfangen eines Echtzeitmesswerts der Extrusionsbaugruppe (106) und zum Justieren des Eingangssteuerwerts auf der Basis des Echtzeitmesswerts konfiguriert ist, wobei der Echtzeitmesswert einen Strömungsmesswert, einen Druckmesswert, einen Gedruckte-Linie-Breitenmesswert oder eine Kombination davon umfasst, und/oder wobei die Steuerung (112) ferner zum Empfangen eines befohlenen Profils zum Extrudieren des Aufbaumaterials (114) entlang einer Aufbaufläche und zum Modifizieren des befohlenen Profils auf der Basis eines Hydraulikkreismodells der Extrusionsbaugruppe (106), der Anwendung der hydraulischen Kapazitätswerte (122), der hydraulischen Widerstandswerte (124) und des Zielausgangsstroms auf das Hydraulikkreismodell und von Echtzeitdaten der Extrusionsbaugruppe (106) konfiguriert ist, und/oder wobei die Steuerung (112) ferner zum Empfangen mindestens eines Werkzeugwegbefehls zur Steuerung der Bewegung der Extrusionsbaugruppe (106) entlang der Bauplatte und zum Justieren des mindestens einen Werkzeugwegbefehls auf der Basis des Eingangssteuerwerts konfiguriert ist.

**9.** System (102) nach einem der Ansprüche 1-8, wobei die Steuerung (112) eine lokale Steuerung ist oder wobei die Steuerung (112) eine Fernsteuerung ist.

**10.** Verfahren (400) zum Steuern der Extrusion eines Aufbaumaterials (114) zur Herstellung eines dreidimensionalen (3D) Objekts (104), wobei das Verfahren Folgendes beinhaltet:

Steuern (406) mindestens eines Aktuators (108) einer Extrusionsbaugruppe (106), um das Aufbaumaterial (114) einem Extrusionskopf (110) der Extrusionsbaugruppe (106) auf der Basis eines Eingangssteuerwerts zuzuführen; und

Erhitzen (408) des Aufbaumaterials (114) innerhalb einer Schmelzzone des Extrusionskopfs (110) vor dem Extrudieren eines Ausgangsstroms (120) des Aufbaumaterials (114), um das 3D-Objekt (104) zu erzeugen, **dadurch gekennzeichnet, dass** der Eingangssteuerwert eine Funktion (i) einer hydraulischen Kapazität (122) und eines hydraulischen Widerstands (124) ist, die hydraulische Kapazitätswerte (22) bzw. hydraulische Widerstandswerte (24) darstellen, die mit dem Aufbaumaterial (114), einer Extrusionsbaugruppe (106) oder einer Kombination davon an einer oder mehreren Stellen der Extrusionsbaugruppe (106) relativ zu einer Schmelzzone (118) assoziiert sind, und (ii) eines Zielausgangsstroms ist, wobei der Eingangssteuerwert es ermöglicht, dass der Ausgangsstrom (120) dem Zielausgangsstrom entspricht.

**11.** Verfahren (400) nach Anspruch 10, das ferner das irreversible Verformen des Aufbaumaterials (114) innerhalb der Schmelzzone (118) durch Erhöhen einer Temperatur des Aufbaumaterials (114) beinhaltet und/oder ferner das Einstellen des Eingangssteuerwerts auf einen Eingangsflusswert oder einen Eingangsdruckwert beinhaltet.

**12.** Verfahren (400) nach Anspruch 10 oder 11, das ferner das Darstellen jedes der hydraulischen Widerstandswerte (124) durch eine jeweilige Änderung des Drucks pro Änderung der Strömungrate des Aufbaumaterials (114) an einer jeweiligen Stelle relativ zur Schmelzzone (118) beinhaltet, und/oder das ferner das Darstellen jedes der hydraulischen Kapazitätswerte (122) durch eine jeweilige erste Menge an in der Extrusionsbaugruppe (106) gespeichertem Aufbaumaterial (114) pro einer zweiten Menge an auf die Extrusionsbaugruppe (106) an einer jeweiligen Stelle relativ zur Schmelzzone (118) ausgeübtem Druck beinhaltet.

**13.** Verfahren (400) nach einem der Ansprüche 10-12, das ferner das Konfigurieren der hydraulischen Kapazitätswerte (122) beinhaltet, so dass sie einen ersten hydraulischen Kapazitätswert (122) und einen zweiten hydraulischen Kapazitätswert (122) einschließen, wobei der erste hydraulische Kapazitätswert (122) eine erste hydraulische Kapazität (22) der Extrusionsbaugruppe (106) und des Aufbaumaterials (114) in einer festen Form vor einem Eintritt in die Schmelzzone (118) darstellt, der zweite hydraulische Kapazitätswert (122) eine zweite hydraulische Kapazität (22) der Extrusionsbaugruppe (106) und des Aufbaumaterials (114) in einer geschmolzenen oder teilweise geschmolzenen Form innerhalb der Schmelzzone (118) darstellt, und/oder das ferner das Konfigurieren der hydraulischen Widerstandswerte (124) beinhaltet, so dass sie einen ersten Widerstandswert (124), einen zweiten Widerstandswert (124) und einen dritten Widerstandswert (124) einschließen, wobei der erste Widerstandswert (124) einen ersten Widerstand (24) des Aufbaumaterials (114) in einer ersten geschmolzenen oder teilweise geschmolzenen Form innerhalb der Schmelzzone (118) darstellt, der zweite Widerstandswert (124) einen zweiten Widerstand (24) des Aufbaumaterials (114) in einer zweiten geschmolzenen oder teilweise geschmolzenen Form weiter innerhalb der Schmelzzone (118) und näher an einem Ausgang der Schmelzzone (118) relativ zum ersten Widerstand (24) darstellt, der dritte Widerstandswert (124) einen dritten Widerstand (24) des Aufbaumaterials (114) in einer dritten geschmolzenen oder teilweise geschmolzenen Form nach dem Austritt aus der Schmelzzone (118) und außerhalb des Extrusionskopfs (110) darstellt, und/oder wobei die hydraulischen Kapazitätswerte (122) und hydraulischen Widerstandswerte (124) spezifisch sind für mindestens eines von: der Extrusionsbaugruppe (106), einer benetzten Geometrie der Extrusionsbaugruppe (106), einer Eigenschaft des Aufbaumaterials (114), einer Umgebungstemperatur um die und außerhalb der Extrusionsbaugruppe (106), einer Temperatur des Aufbaumaterials (114) innerhalb der Extrusionsbaugruppe (106), einer Länge des Aufbaumaterials (114) in fester Form zwischen dem mindestens einen Aktuator (108) und der Schmelzzone (118), das aus der Extrusionsbaugruppe (106) extrudiert werden soll, oder einem Durchmesser des Aufbaumaterials (114), das aus der Extrusionsbaugruppe (106) extrudiert werden soll.

**14.** Verfahren (400) nach einem der Ansprüche 10-13, das ferner das Assoziieren der hydraulischen Kapazitätswerte (122) und der hydraulischen Widerstandswerte (124) mit kapazitiven bzw. resistiven Elementen in einem Hydraulikkreismodell beinhaltet, und/oder das ferner das Bestimmen der hydraulischen Widerstandswerte (124) auf der Basis der Messung eines Massen- oder Volumenausflusses des Aufbaumaterials (114) und eines Drucks innerhalb der Extrusionsbaugruppe (106) bei einer fest eingestellten Temperatur und einer auf das Aufbaumaterial (114) angewandten Druckbedingung beinhaltet, und/oder das ferner das Bestimmen der hydraulischen Widerstandswerte (124) auf der Basis der Messung eines Drucks innerhalb der Extrusionsbaugruppe (106) bei einer fest eingestellten Temperatur und von konstanten Massen- oder Volumenzuflussraten des Aufbaumaterials (114) beinhaltet, und/oder das ferner das Bestimmen der hydraulischen Kapazitätswerte (122) auf der Basis einer gemessenen Linienbreite des Aufbaumaterials (114) beinhaltet, die entlang einer Aufbauplatte als Reaktion auf eine befohlene Änderung des Ausgangsflusses (120) erzeugt wird.

**15.** Verfahren (400) nach einem der Ansprüche 10-14, das ferner das Bestimmen der hydraulischen Kapazitätswerte (122) und/oder der hydraulischen Widerstandswerte (124) vor, während oder nach dem Drucken des oder eines 3D-Objekts (104) beinhaltet.

**Revendications**

**1.** Système (102) de production d'un objet tridimensionnel (3D) (104), le système (102) comprenant:

un ensemble d'extrusion (106) comprenant au moins un actionneur (108) et une tête d'extrusion (110); et
un dispositif de commande (112), le dispositif de commande (112) étant configuré pour commander l'au moins un actionneur (108) pour fournir un matériau de fabrication (114) à la tête d'extrusion (110) sur la base d'une valeur de commande d'entrée, la tête d'extrusion (110) étant configurée pour chauffer le matériau de fabrication (114) à l'intérieur d'une zone de fusion (118) de la tête d'extrusion (110) avant d'extruder un débit de sortie (120) du matériau de fabrication (114) pour produire l'objet 3D (104),
le système étant **caractérisé en ce que** la valeur de commande d'entrée est fonction (i) d'une capacité hydraulique (22) et d'une résistance hydraulique (24), représentant respectivement des valeurs de capacité hydraulique (122) et des valeurs de résistance hydraulique (124) associées au matériau de fabrication (114), à l'ensemble d'extrusion (106) ou à une combinaison correspondante au niveau d'un ou plusieurs emplacements de l'ensemble d'extrusion (106) par rapport à la zone de fusion (118), et (ii) d'un débit de sortie cible (126), la valeur de commande d'entrée permettant au débit de sortie (120) de correspondre au débit de sortie cible (126).

**2.** Système (102) selon la revendication 1, dans lequel la zone de fusion (118) est une région de l'ensemble d'extrusion (106) dans laquelle le matériau de fabrication (114) est déformé, de manière irréversible, en raison d'une augmentation de température, et/ou dans lequel la valeur de commande d'entrée est une valeur de débit d'entrée ou une valeur de pression d'entrée.

**3.** Système (102) selon l'une quelconque des revendications 1 et 2, dans lequel les valeurs de résistance hydraulique (124) représentent chacune une variation respective de pression en fonction d'une variation de débit du matériau de fabrication (114) au niveau du ou des emplacements par rapport à la zone de fusion (118), et/ou dans lequel les valeurs de capacité hydraulique (122) représentent chacune une première quantité respective de matériau de fabrication (114) stockée dans l'ensemble d'extrusion (106) en fonction d'une seconde quantité de pression appliquée à l'ensemble d'extrusion (106) au niveau du ou des emplacements par rapport à la zone de fusion (118).

**4.** Système (102) selon l'une quelconque des revendications 1 à 3, dans lequel les valeurs de capacité hydraulique (122) comprennent une première valeur de capacité hydraulique (122) et une seconde valeur de capacité hydraulique (122), la première valeur de capacité hydraulique (122) représentant une première capacité hydraulique (22) de l'ensemble d'extrusion (106) et du matériau de fabrication (114) sous une forme solide avant une entrée dans la zone de fusion (118), la seconde valeur de capacité hydraulique (122) représentant une seconde capacité hydraulique (22) de l'ensemble d'extrusion (106) et du matériau de fabrication (114) sous une forme fondue ou partiellement fondue à l'intérieur de la zone de fusion (118), et/ou dans lequel les valeurs de résistance hydraulique (124) comprennent une première valeur de résistance (124), une deuxième valeur de résistance (124) et une troisième valeur de résistance (124), la première valeur de résistance (124) représentant une première résistance (24) du matériau de fabrication (114) sous une première forme fondue ou partiellement fondue à l'intérieur de la zone de fusion (118), la deuxième valeur de résistance (124) représentant une deuxième résistance (24) du matériau de fabrication (114) sous une deuxième forme fondue ou partiellement fondue plus loin à l'intérieur de la zone de fusion (118) et plus près d'une sortie de la zone de fusion (118) par rapport à la première résistance (24), la troisième valeur de résistance (124) représentant une troisième résistance (24) du matériau de fabrication (114) sous une troisième forme fondue ou partiellement fondue après la sortie de la zone de fusion (118) et à l'extérieur de la tête d'extrusion (110), et/ou dans lequel les valeurs de capacité hydraulique (122) et les valeurs de résistance hydraulique (124) sont spécifiques d'au moins un des éléments suivants: l'ensemble d'extrusion (106), une géométrie mouillée de l'ensemble d'extrusion (106), une caractéristique du matériau de fabrication (114), une température ambiante entourant l'ensemble d'extrusion (106) et externe à celui-ci, une température du matériau de fabrication (114) à l'intérieur de l'ensemble d'extrusion (106), une longueur du matériau de fabrication (114) sous une forme solide entre l'au moins un actionneur (108) et la zone de fusion (118) à extruder à partir de l'ensemble d'extrusion (106), ou un diamètre du matériau de fabrication (114) à extruder à partir de l'ensemble d'extrusion (106).

**5.** Système (102) selon l'une quelconque des revendications 1 à 4, dans lequel les valeurs de capacité hydraulique

(122) et les valeurs de résistance hydraulique (124) sont associées respectivement à des éléments capacitifs et résistifs dans un modèle de circuit hydraulique, et/ou dans lequel les valeurs de résistance hydraulique (124) sont déterminées sur la base d'une mesure d'un débit sortant de masse ou de volume du matériau de fabrication (114) et d'une pression à l'intérieur de l'ensemble d'extrusion (106) à une température de consigne fixée et de l'imposition d'une condition appliquée au matériau de fabrication (114), et/ou dans lequel les valeurs de résistance hydraulique (124) sont déterminées sur la base d'une mesure d'une pression à l'intérieur de l'ensemble d'extrusion (106) à une température de consigne fixée et à des taux constants d'un débit entrant de masse ou de volume du matériau de fabrication (114), et/ou
dans lequel les valeurs de capacité hydraulique (122) sont déterminées sur la base d'une largeur linéaire mesurée du matériau de fabrication (114) produite le long d'une plaque de fabrication en réponse à une variation ordonnée du débit de sortie (120).

**6.** Système (102) selon l'une quelconque des revendications 1 à 5, dans lequel les valeurs de capacité hydraulique (122) et/ou les valeurs de résistance hydraulique (124) sont déterminées avant, pendant ou après l'impression de l'objet ou d'un objet 3D (104).

**7.** Système (102) selon l'une quelconque des revendications 1 à 6, dans lequel la tête d'extrusion (110) est configurée pour chauffer le matériau de fabrication (114) à l'intérieur de la zone de fusion (118) par l'intermédiaire d'au moins un élément chauffant accouplé à la tête d'extrusion (110) ou par friction.

**8.** Système (102) selon l'une quelconque des revendications 1 à 7, dans lequel le dispositif de commande (112) est en outre configuré pour recevoir une mesure en temps réel de l'ensemble d'extrusion (106) et régler la valeur de commande d'entrée sur la base de la mesure en temps réel, la mesure en temps réel comprenant une mesure de débit, une mesure de pression, une mesure de largeur linéaire imprimée ou une combinaison correspondante, et/ou dans lequel le dispositif de commande (112) est en outre configuré pour recevoir un profil ordonné pour extruder le matériau de fabrication (114) le long d'une surface de fabrication et pour modifier le profil ordonné sur la base d'un modèle de circuit hydraulique de l'ensemble d'extrusion (106), de l'application des valeurs de capacité hydraulique (122), des valeurs de résistance hydraulique (124) et du débit de sortie cible au modèle de circuit hydraulique, et de données en temps réel de l'ensemble d'extrusion (106), et/ou dans lequel le dispositif de commande (112) est en outre configuré pour recevoir au moins un ordre de trajet d'outil pour commander le déplacement de l'ensemble d'extrusion (106) le long de la plaque de fabrication et pour régler l'au moins un ordre de trajet d'outil sur la base de la valeur de commande d'entrée.

**9.** Système (102) selon l'une quelconque des revendications 1 à 8, dans lequel le dispositif de commande (112) est un dispositif de commande local, ou dans lequel le dispositif de commande (112) est un dispositif de commande distant.

**10.** Procédé (400) de commande d'extrusion d'un matériau de fabrication (114) pour produire un objet tridimensionnel (3D) (104), le procédé consistant à:

commander (406) au moins un actionneur (108) d'un ensemble d'extrusion (106) pour fournir le matériau de fabrication (114) à une tête d'extrusion (110) de l'ensemble d'extrusion (106) sur la base d'une valeur de commande d'entrée; et
chauffer (408) le matériau de fabrication (114) à l'intérieur d'une zone de fusion de la tête d'extrusion (110) avant d'extruder un débit de sortie (120) du matériau de fabrication (114) pour produire l'objet 3D (104),
le système étant **caractérisé en ce que** la valeur de commande d'entrée est fonction (i) d'une capacité hydraulique (122) et d'une résistance hydraulique (124), représentant respectivement des valeurs de capacité hydraulique (22) et des valeurs de résistance hydraulique (24) associées au matériau de fabrication (114), à un ensemble d'extrusion (106) ou à une combinaison correspondante au niveau d'un ou plusieurs emplacements de l'ensemble d'extrusion (106) par rapport à une zone de fusion (118), et (ii) d'un débit de sortie cible, la valeur de commande d'entrée permettant au débit de sortie (120) de correspondre au débit de sortie cible.

**11.** Procédé (400) selon la revendication 10, consistant en outre à déformer le matériau de fabrication (114), de manière irréversible, à l'intérieur de la zone de fusion (118) en augmentant une température du matériau de fabrication (114), et/ou consistant en outre à régler la valeur de commande d'entrée à une valeur de débit d'entrée ou à une valeur de pression d'entrée.

**12.** Procédé (400) selon l'une quelconque des revendications 10 et 11, consistant en outre à représenter chacune des

valeurs de résistance hydraulique (124) par une variation respective de pression en fonction d'une variation de débit du matériau de fabrication (114) au niveau d'un emplacement respectif par rapport à la zone de fusion (118), et/ou consistant en outre à représenter chacune des valeurs de capacité hydraulique (122) par une première quantité respective de matériau de fabrication (114) stockée dans l'ensemble d'extrusion (106) en fonction d'une seconde quantité de pression appliquée à l'ensemble d'extrusion (106) au niveau d'un emplacement respectif par rapport à la zone de fusion (118).

**13.** Procédé (400) selon l'une quelconque des revendications 10 à 12, consistant en outre à configurer les valeurs de capacité hydraulique (122) pour qu'elles comprennent une première valeur de capacité hydraulique (122) et une seconde valeur de capacité hydraulique (122), la première valeur de capacité hydraulique (122) représentant une première capacité hydraulique (22) de l'ensemble d'extrusion (106) et du matériau de fabrication (114) sous une forme solide avant une entrée dans la zone de fusion (118), la seconde valeur de capacité hydraulique (122) représentant une seconde capacité hydraulique (22) de l'ensemble d'extrusion (106) et du matériau de fabrication (114) sous une forme fondue ou partiellement fondue à l'intérieur de la zone de fusion (118), et/ou consistant en outre à configurer les valeurs de résistance hydraulique (124) pour qu'elles comprennent une première valeur de résistance (124), une deuxième valeur de résistance (124) et une troisième valeur de résistance (124), la première valeur de résistance (124) représentant une première résistance (24) du matériau de fabrication (114) sous une première forme fondue ou partiellement fondue à l'intérieur de la zone de fusion (118), la deuxième valeur de résistance (124) représentant une deuxième résistance (24) du matériau de fabrication (114) sous une deuxième forme fondue ou partiellement fondue plus loin à l'intérieur de la zone de fusion (118) et plus près d'une sortie de la zone de fusion (118) par rapport à la première résistance (24), la troisième valeur de résistance (124) représentant une troisième résistance (24) du matériau de fabrication (114) sous une troisième forme fondue ou partiellement fondue après la sortie de la zone de fusion (118) et à l'extérieur de la tête d'extrusion (110), et/ou dans lequel les valeurs de capacité hydraulique (122) et les valeurs de résistance hydraulique (124) sont spécifiques d'au moins un des éléments suivants: l'ensemble d'extrusion (106), une géométrie mouillée de l'ensemble d'extrusion (106), une caractéristique du matériau de fabrication (114), une température ambiante entourant l'ensemble d'extrusion (106) et externe à celui-ci, une température du matériau de fabrication (114) à l'intérieur de l'ensemble d'extrusion (106), une longueur du matériau de fabrication (114) sous une forme solide entre l'au moins un actionneur (108) et la zone de fusion (118) à extruder à partir de l'ensemble d'extrusion (106), ou un diamètre du matériau de fabrication (114) à extruder à partir de l'ensemble d'extrusion (106).

**14.** Procédé (400) selon l'une quelconque des revendications 10 à 13, consistant en outre à associer les valeurs de capacité hydraulique (122) et les valeurs de résistance hydraulique (124) à respectivement des éléments capacitifs et résistifs dans un modèle de circuit hydraulique, et/ou consistant en outre à déterminer les valeurs de résistance hydraulique (124) sur la base d'une mesure d'un débit sortant de masse ou de volume du matériau de fabrication (114) et d'une pression à l'intérieur de l'ensemble d'extrusion (106) à une température de consigne fixée et de l'imposition d'une condition appliquée au matériau de fabrication (114), et/ou consistant en outre à déterminer les valeurs de résistance hydraulique (124) sur la base d'une mesure d'une pression à l'intérieur de l'ensemble d'extrusion (106) à une température de consigne fixée et à des taux constants d'un débit entrant de masse ou de volume du matériau de fabrication (114), et/ou consistant en outre à déterminer les valeurs de capacité hydraulique (122) sur la base d'une largeur linéaire mesurée du matériau de fabrication (114) produite le long d'une plaque de fabrication en réponse à une variation ordonnée du débit de sortie (120).

**15.** Procédé (400) selon l'une quelconque des revendications 10 à 14, consistant en outre à déterminer les valeurs de capacité hydraulique (122) et/ou les valeurs de résistance hydraulique (124) avant, pendant ou après l'impression de l'objet ou d'un objet 3D (104).

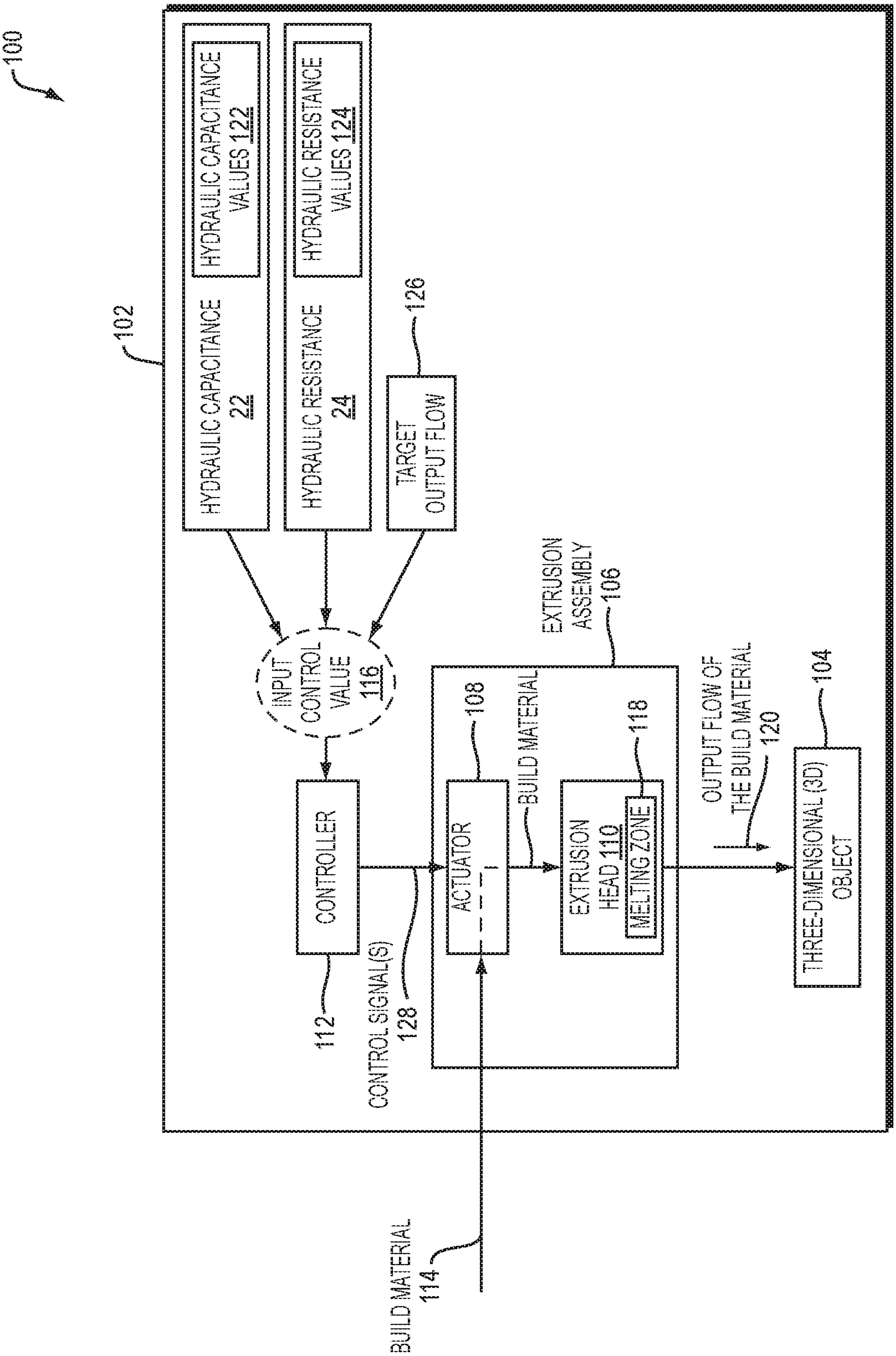

100
102
HYDRAULIC CAPACITANCE 22
HYDRAULIC CAPACITANCE VALUES 122
HYDRAULIC RESISTANCE 24
HYDRAULIC RESISTANCE VALUES 124
TARGET OUTPUT FLOW
126
INPUT CONTROL VALUE 116
CONTROLLER
112
CONTROL SIGNAL(S) 128
EXTRUSION ASSEMBLY 106
ACTUATOR
108
BUILD MATERIAL
EXTRUSION HEAD 110
MELTING ZONE
118
OUTPUT FLOW OF THE BUILD MATERIAL 120
THREE-DIMENSIONAL (3D) OBJECT
104
BUILD MATERIAL 114


FIG. 1

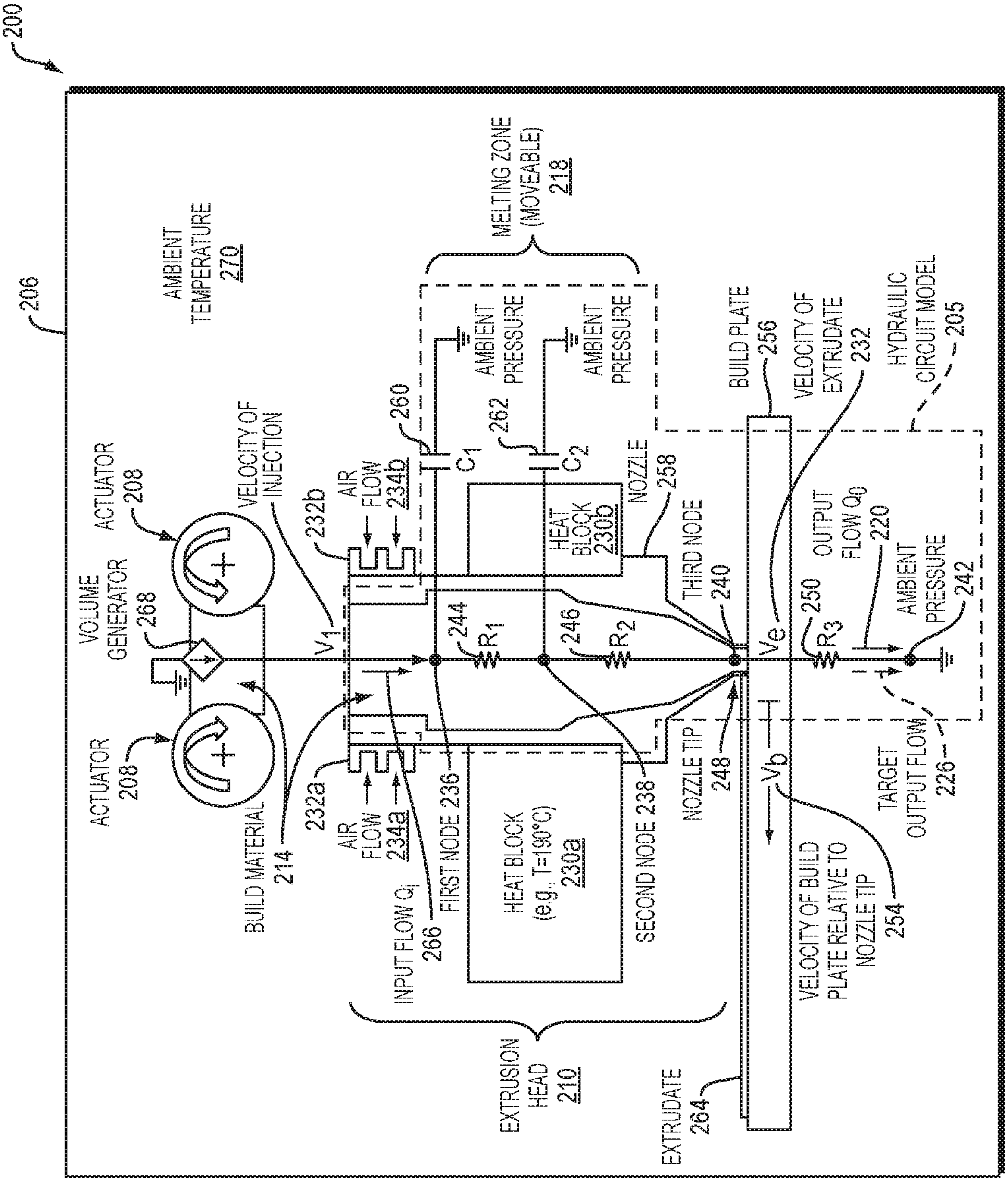
200
206
AMBIENT TEMPERATURE 270
ACTUATOR 208
ACTUATOR 208
VOLUME GENERATOR 268
VELOCITY OF INJECTION
V1
BUILD MATERIAL 214
232a
232b
AIR FLOW 234a
AIR FLOW 234b
INPUT FLOW Qi 266
FIRST NODE 236
244
R1
SECOND NODE 238
246
R2
HEAT BLOCK (e.g., T=190°C) 230a
HEAT BLOCK 230b
260
C1
262
C2
AMBIENT PRESSURE
AMBIENT PRESSURE
MELTING ZONE (MOVEABLE) 218
EXTRUSION HEAD 210
NOZZLE 258
THIRD NODE 240
NOZZLE TIP 248
Ve
Vb
250
R3
BUILD PLATE 256
VELOCITY OF EXTRUDATE 232
HYDRAULIC CIRCUIT MODEL 205
OUTPUT FLOW Q0 220
AMBIENT PRESSURE 242
TARGET OUTPUT FLOW 226
VELOCITY OF BUILD PLATE RELATIVE TO NOZZLE TIP 254
EXTRUDATE 264

FIG. 2

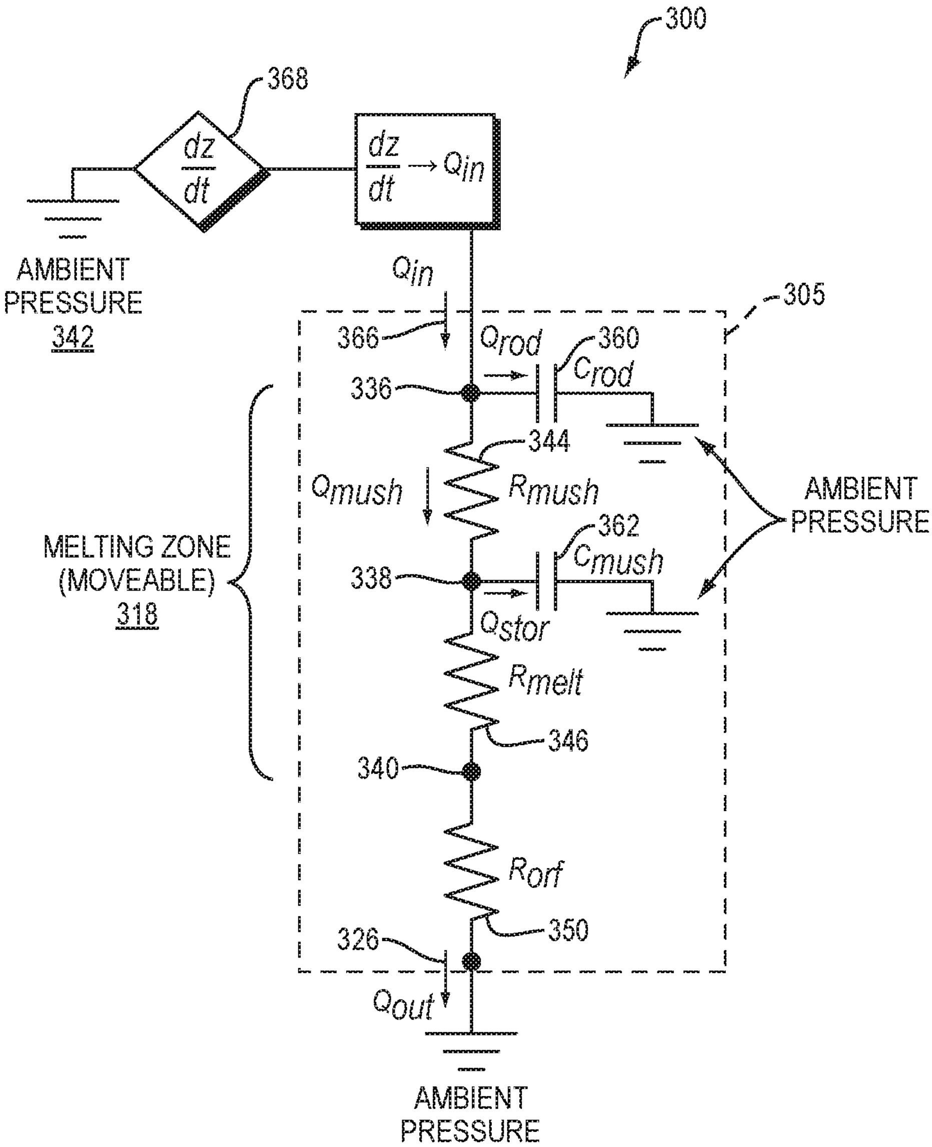
300
368
dz/dt
dz/dt → Qin
AMBIENT PRESSURE 342
Qin
305
366
Qrod
360
Crod
336
344
Qmush
Rmush
AMBIENT PRESSURE
362
Cmush
MELTING ZONE (MOVEABLE) 318
338
Qstor
Rmelt
346
340
Rorf
350
326
Qout
AMBIENT PRESSURE

FIG. 3

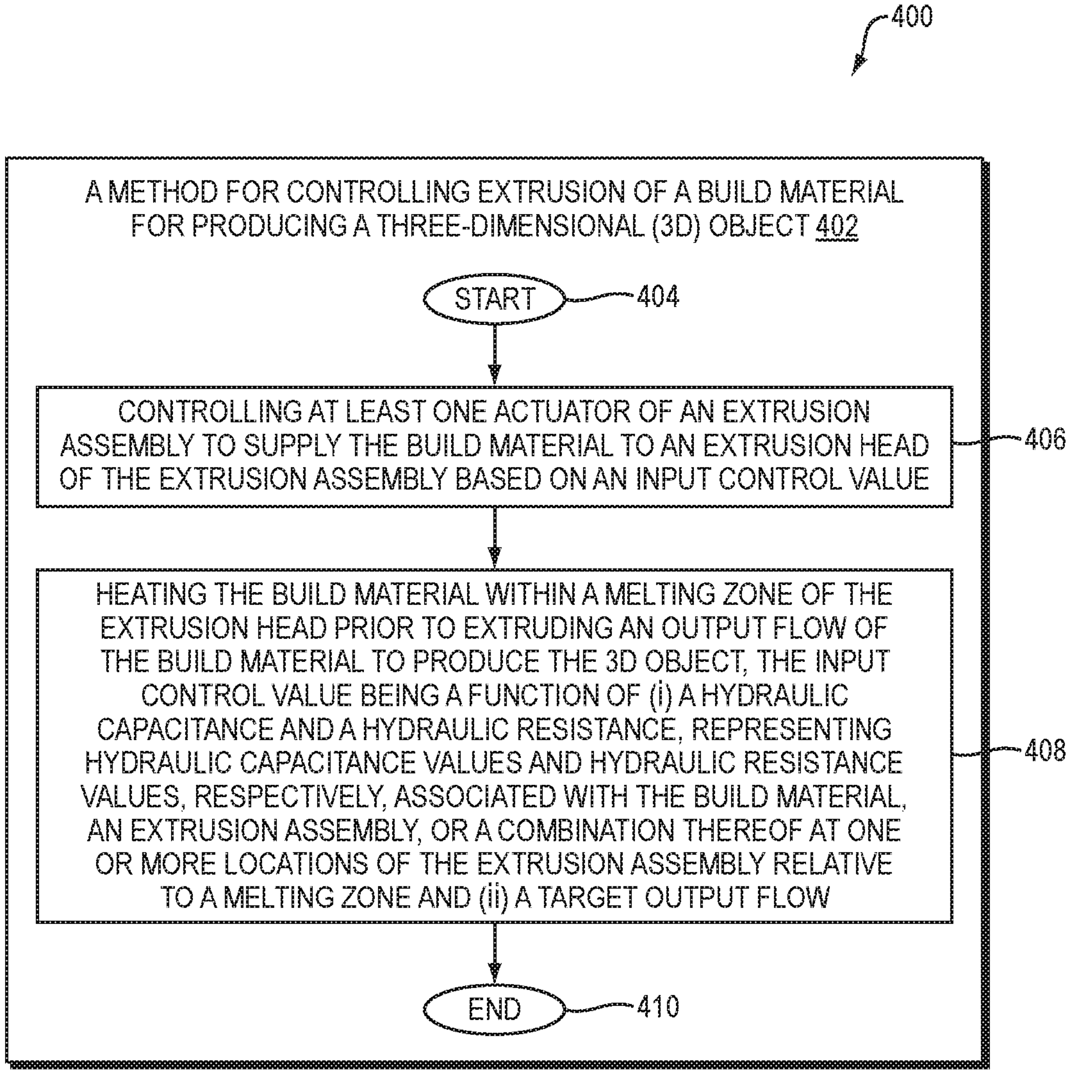
400
A METHOD FOR CONTROLLING EXTRUSION OF A BUILD MATERIAL FOR PRODUCING A THREE-DIMENSIONAL (3D) OBJECT 402
START
404
CONTROLLING AT LEAST ONE ACTUATOR OF AN EXTRUSION ASSEMBLY TO SUPPLY THE BUILD MATERIAL TO AN EXTRUSION HEAD OF THE EXTRUSION ASSEMBLY BASED ON AN INPUT CONTROL VALUE
406
HEATING THE BUILD MATERIAL WITHIN A MELTING ZONE OF THE EXTRUSION HEAD PRIOR TO EXTRUDING AN OUTPUT FLOW OF THE BUILD MATERIAL TO PRODUCE THE 3D OBJECT, THE INPUT CONTROL VALUE BEING A FUNCTION OF (i) A HYDRAULIC CAPACITANCE AND A HYDRAULIC RESISTANCE, REPRESENTING HYDRAULIC CAPACITANCE VALUES AND HYDRAULIC RESISTANCE VALUES, RESPECTIVELY, ASSOCIATED WITH THE BUILD MATERIAL, AN EXTRUSION ASSEMBLY, OR A COMBINATION THEREOF AT ONE OR MORE LOCATIONS OF THE EXTRUSION ASSEMBLY RELATIVE TO A MELTING ZONE AND (ii) A TARGET OUTPUT FLOW
408
END
410

FIG. 4

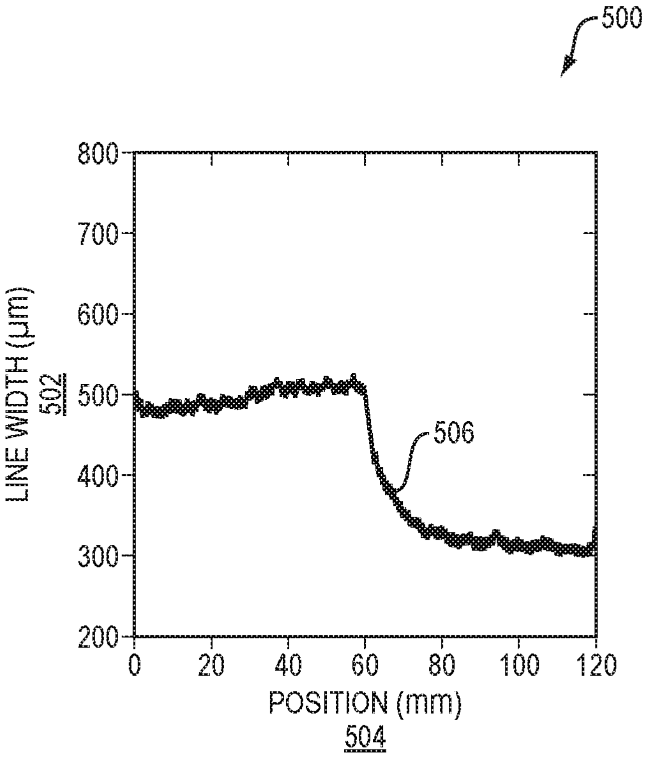


FIG. 5A

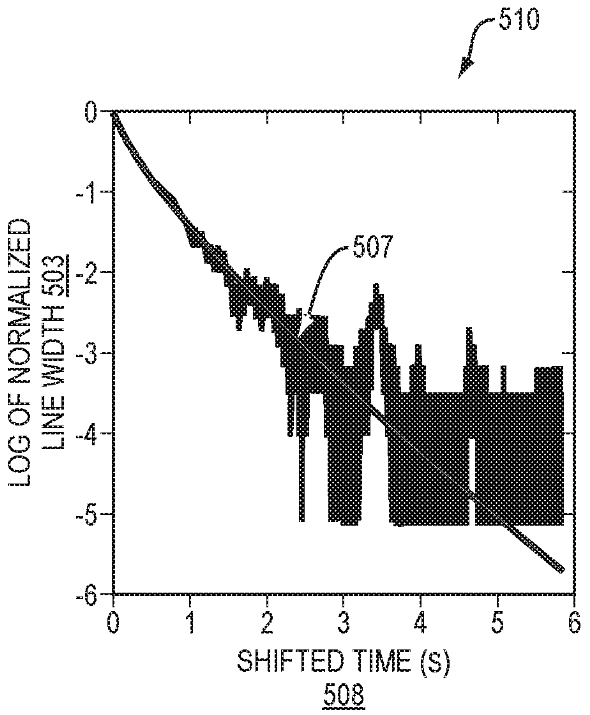


FIG. 5B

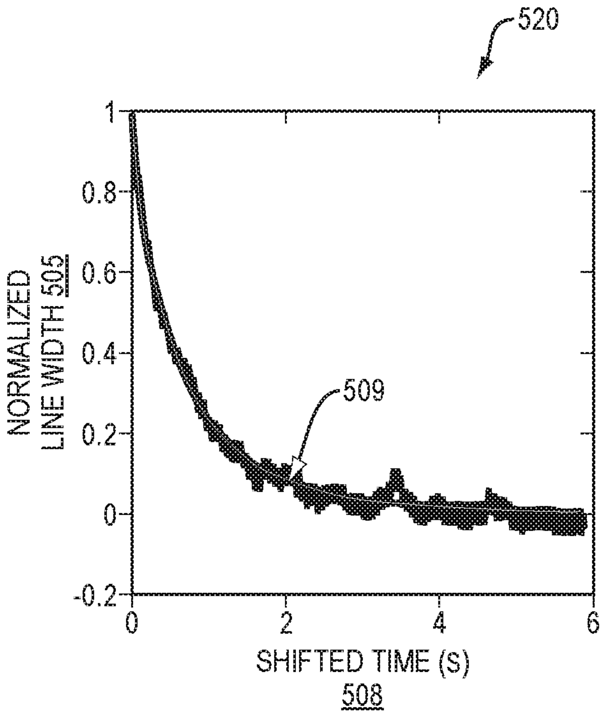


FIG. 5C

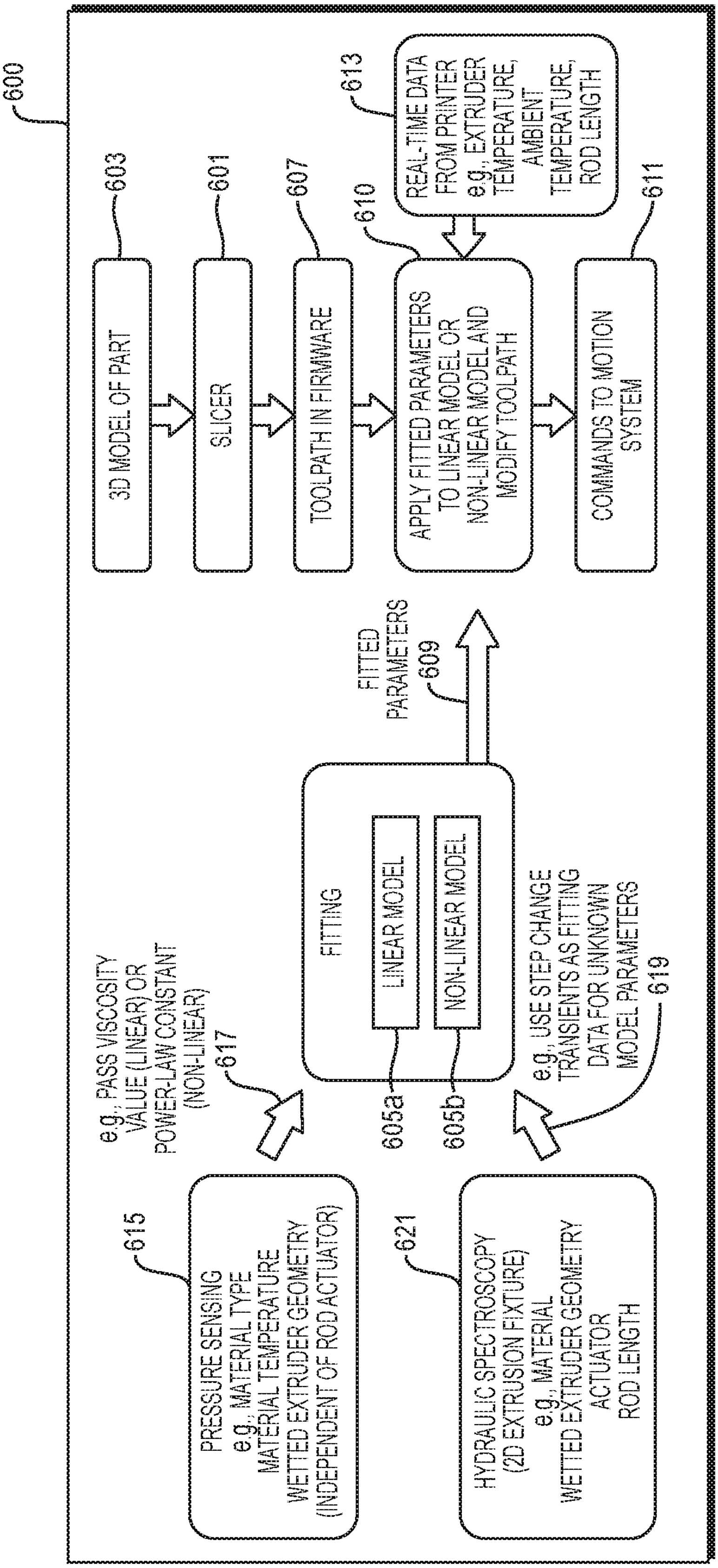
600
3D MODEL OF PART
603
SLICER
601
TOOLPATH IN FIRMWARE
607
APPLY FITTED PARAMETERS TO LINEAR MODEL OR NON-LINEAR MODEL AND MODIFY TOOLPATH
610
REAL-TIME DATA FROM PRINTER e.g., EXTRUDER TEMPERATURE, AMBIENT TEMPERATURE, ROD LENGTH
613
COMMANDS TO MOTION SYSTEM
611
FITTED PARAMETERS
609
FITTING
LINEAR MODEL
NON-LINEAR MODEL
605a
605b
e.g., PASS VISCOSITY VALUE (LINEAR) OR POWER-LAW CONSTANT (NON-LINEAR)
617
e.g., USE STEP CHANGE TRANSIENTS AS FITTING DATA FOR UNKNOWN MODEL PARAMETERS
619
PRESSURE SENSING e.g., MATERIAL TYPE MATERIAL TEMPERATURE WETTED EXTRUDER GEOMETRY (INDEPENDENT OF ROD ACTUATOR)
615
HYDRAULIC SPECTROSCOPY (2D EXTRUSION FIXTURE) e.g., MATERIAL WETTED EXTRUDER GEOMETRY ACTUATOR ROD LENGTH
621

FIG. 6

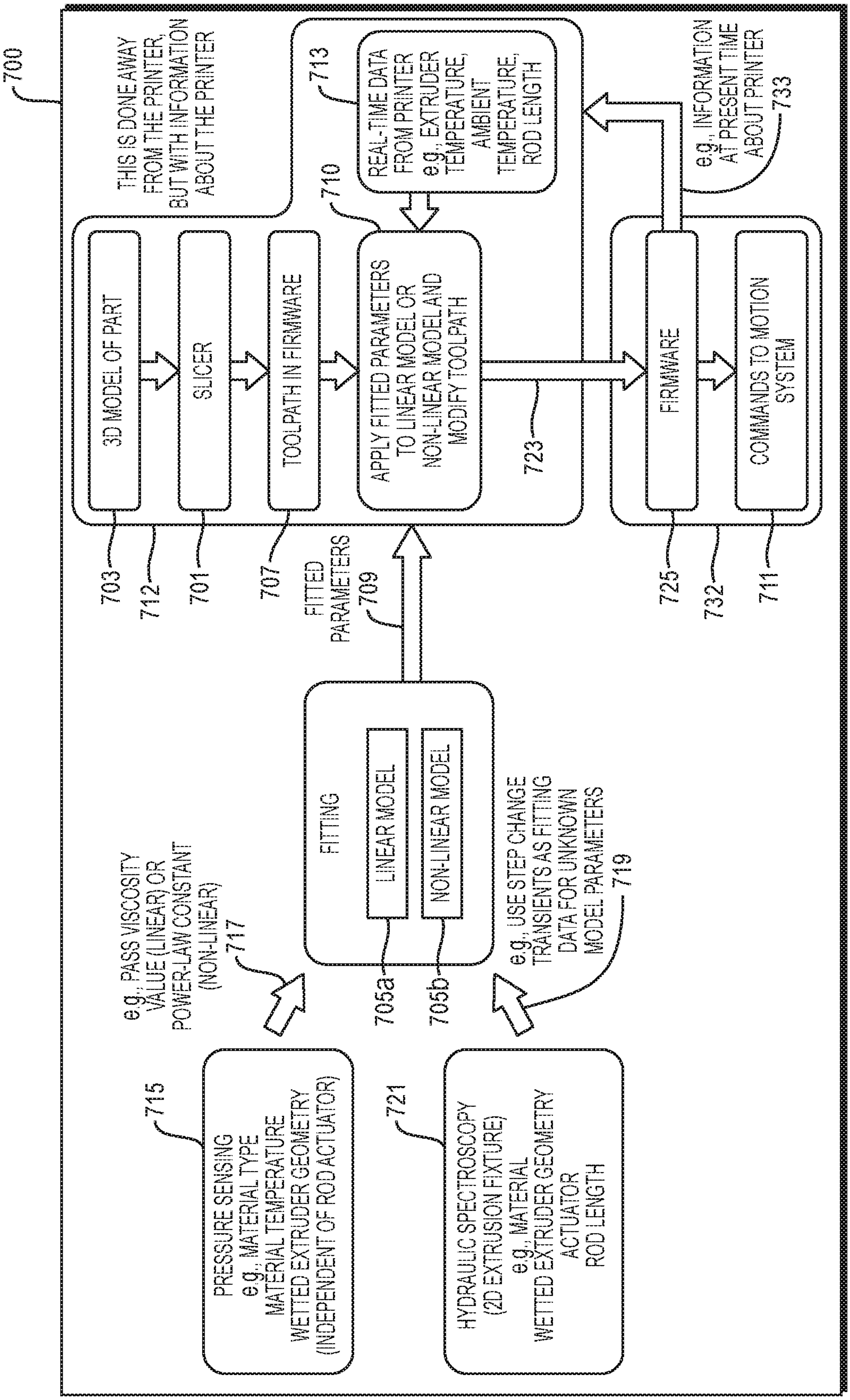
700
THIS IS DONE AWAY FROM THE PRINTER, BUT WITH INFORMATION ABOUT THE PRINTER
713
REAL-TIME DATA FROM PRINTER e.g., EXTRUDER TEMPERATURE, AMBIENT TEMPERATURE, ROD LENGTH
710
e.g., INFORMATION AT PRESENT TIME ABOUT PRINTER
733
3D MODEL OF PART
SLICER
TOOLPATH IN FIRMWARE
APPLY FITTED PARAMETERS TO LINEAR MODEL OR NON-LINEAR MODEL AND MODIFY TOOLPATH
723
FIRMWARE
COMMANDS TO MOTION SYSTEM
703
712
701
707
FITTED PARAMETERS
709
725
732
711
FITTING
LINEAR MODEL
NON-LINEAR MODEL
705a
705b
e.g., PASS VISCOSITY VALUE (LINEAR) OR POWER-LAW CONSTANT (NON-LINEAR)
717
e.g., USE STEP CHANGE TRANSIENTS AS FITTING DATA FOR UNKNOWN MODEL PARAMETERS
719
715
PRESSURE SENSING e.g., MATERIAL TYPE MATERIAL TEMPERATURE WETTED EXTRUDER GEOMETRY (INDEPENDENT OF ROD ACTUATOR)
721
HYDRAULIC SPECTROSCOPY (2D EXTRUSION FIXTURE) e.g., MATERIAL WETTED EXTRUDER GEOMETRY ACTUATOR ROD LENGTH

FIG. 7

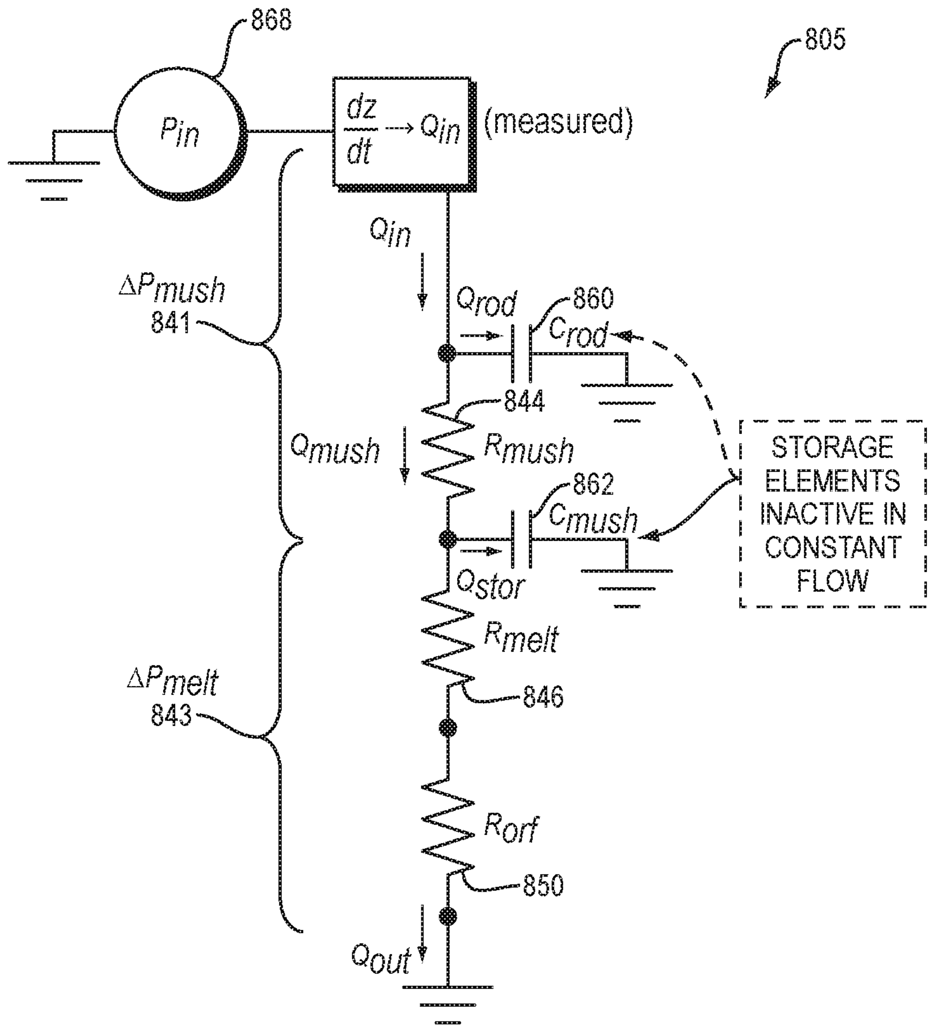


FIG. 8A

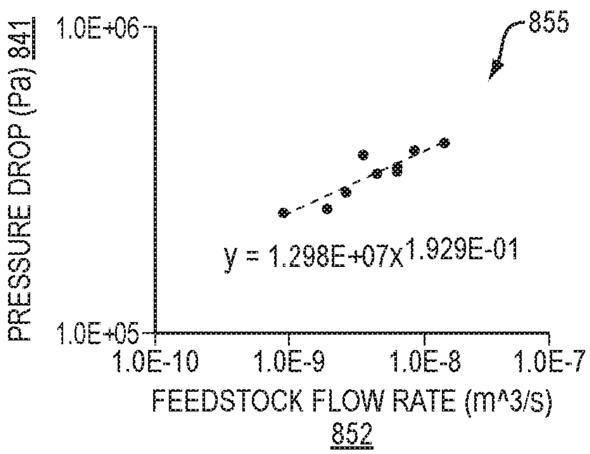


FIG. 8B

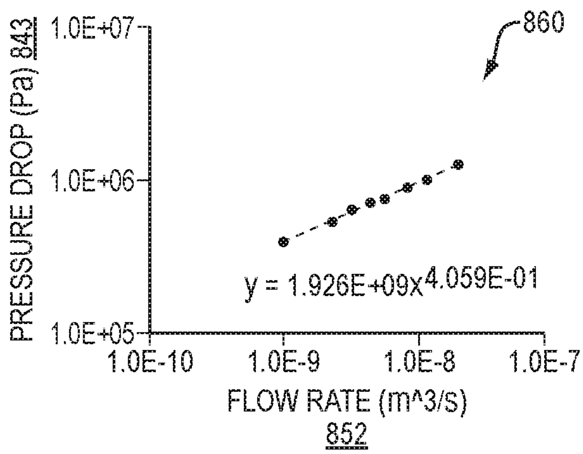


FIG. 8C

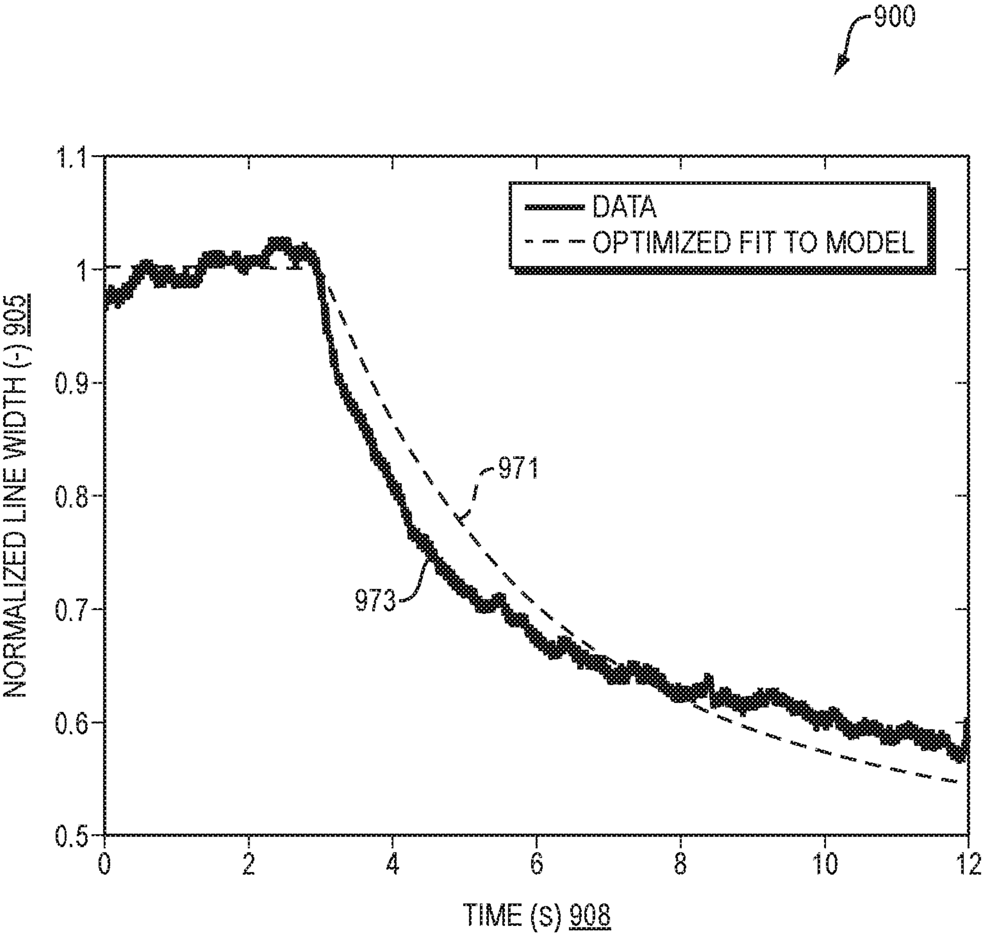
900
DATA
OPTIMIZED FIT TO MODEL
971
973
1.1
1
0.9
0.8
0.7
0.6
0.5
0
2
4
6
8
10
12
NORMALIZED LINE WIDTH (-) 905
TIME (S) 908

FIG. 9

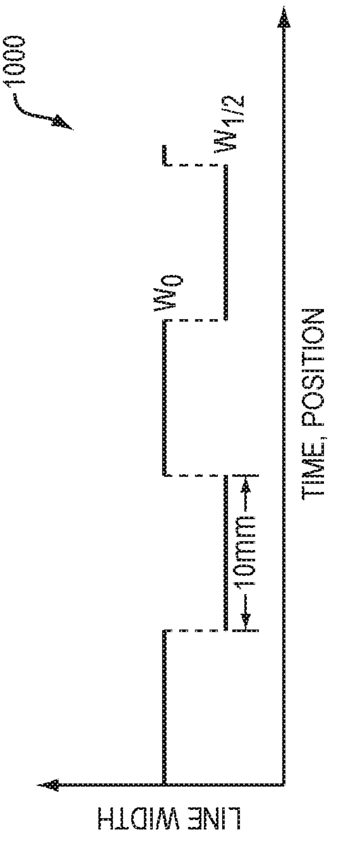


FIG. 10

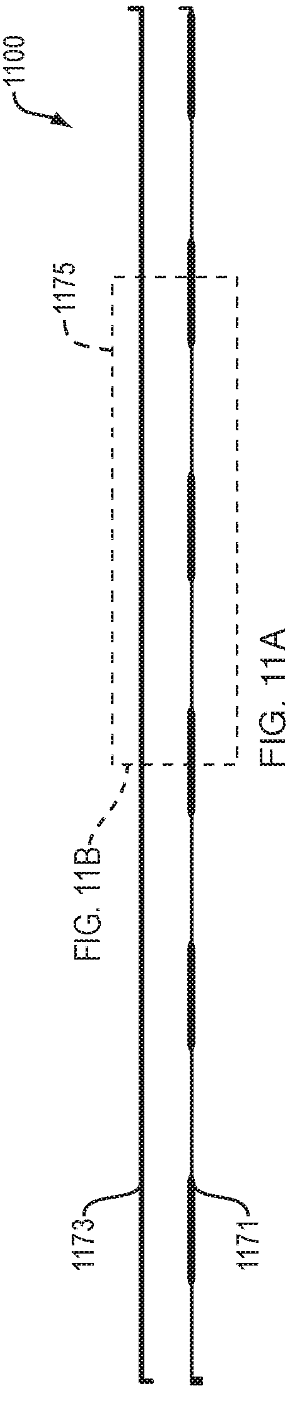


FIG. 11A

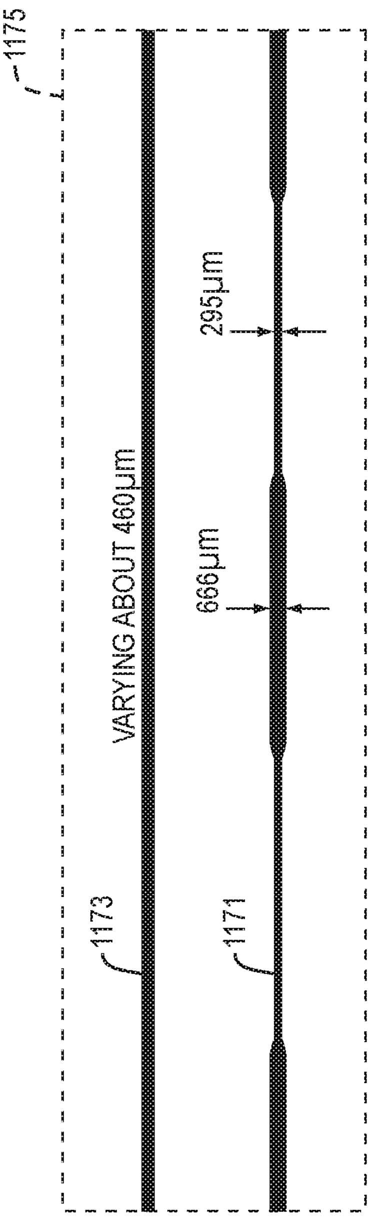


FIG. 11B

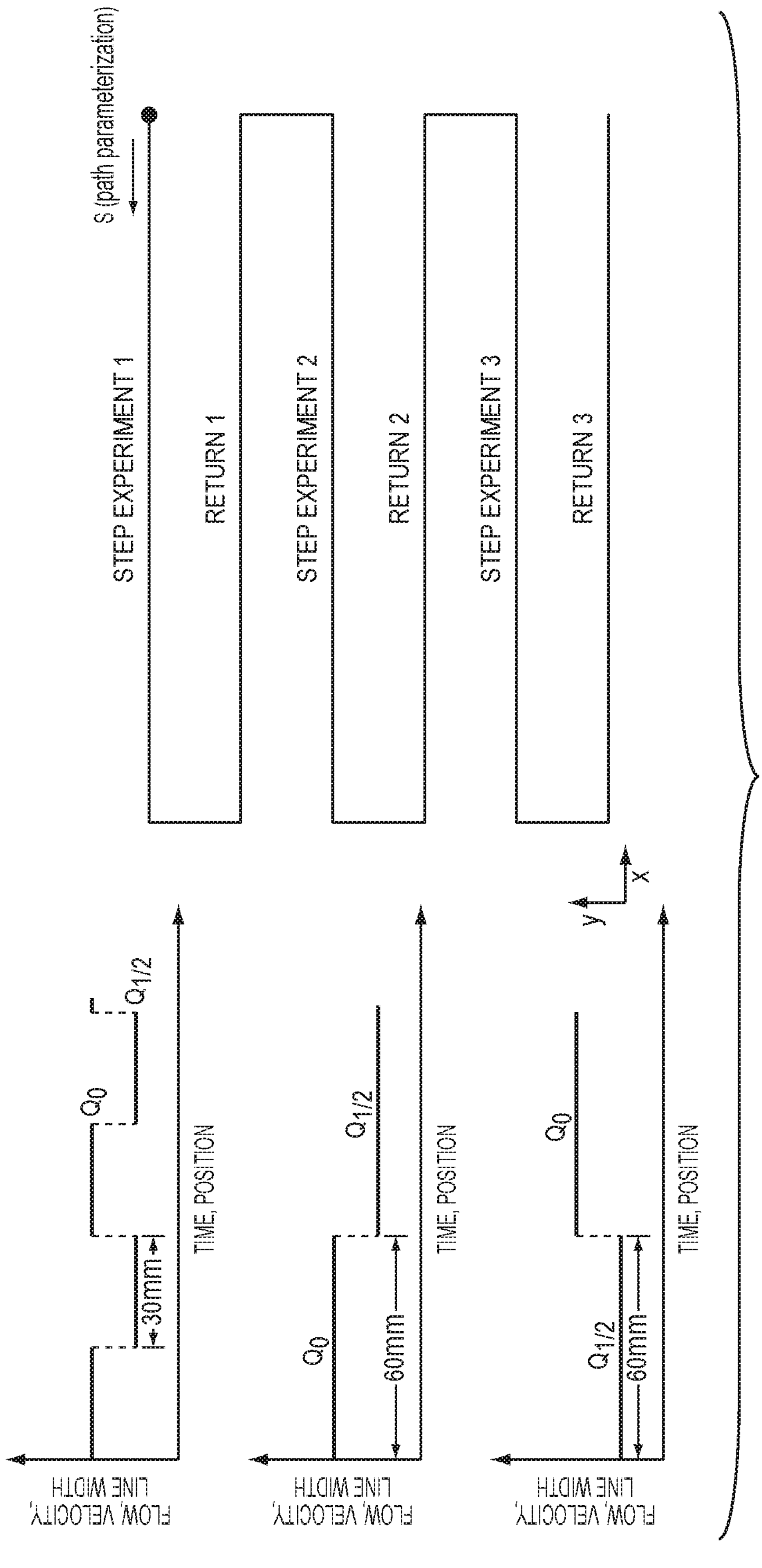
1200
S (path parameterization)
STEP EXPERIMENT 1
RETURN 1
STEP EXPERIMENT 2
RETURN 2
STEP EXPERIMENT 3
RETURN 3
y
x
FLOW, VELOCITY, LINE WIDTH
TIME, POSITION
$Q_0$
$Q_{1/2}$
30mm
FLOW, VELOCITY, LINE WIDTH
TIME, POSITION
$Q_0$
$Q_{1/2}$
60mm
FLOW, VELOCITY, LINE WIDTH
TIME, POSITION
$Q_0$
$Q_{1/2}$
60mm

FIG. 12

1300

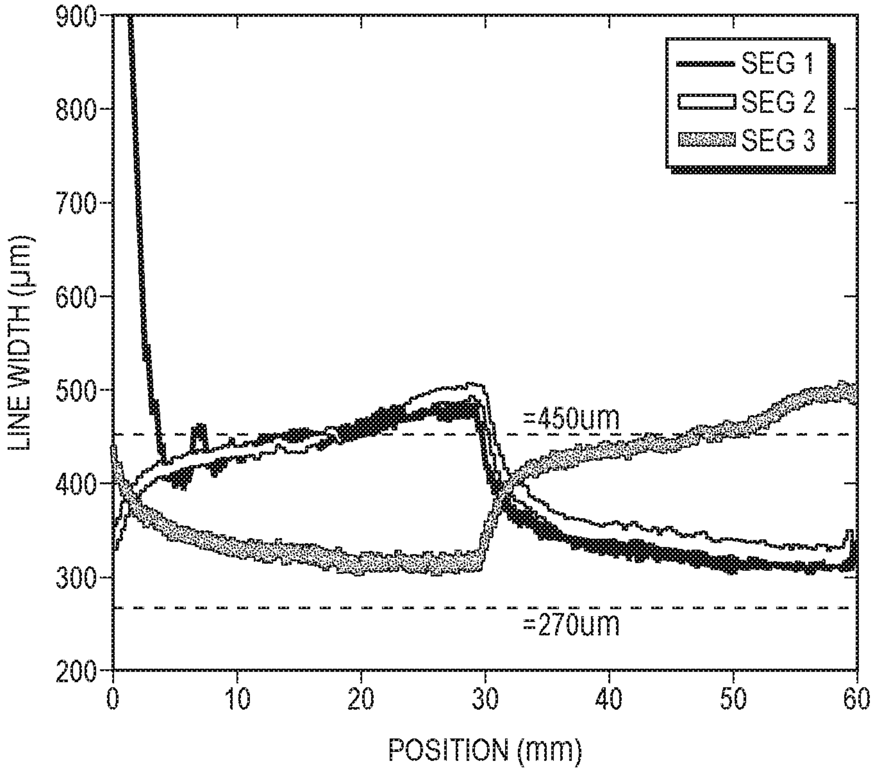

900
800
700
600
500
400
300
200
LINE WIDTH (µm)
0
10
20
30
40
50
60
POSITION (mm)
SEG 1
SEG 2
SEG 3
=450um
=270um


FIG. 13

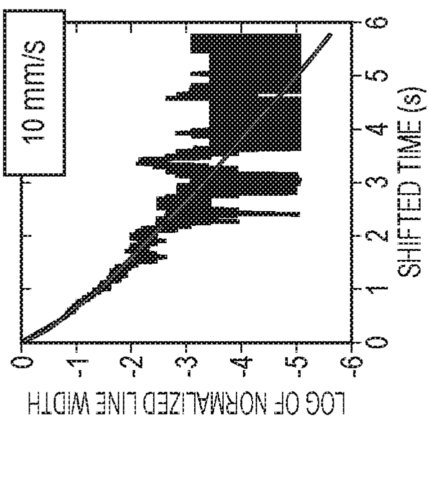


FIG. 14A

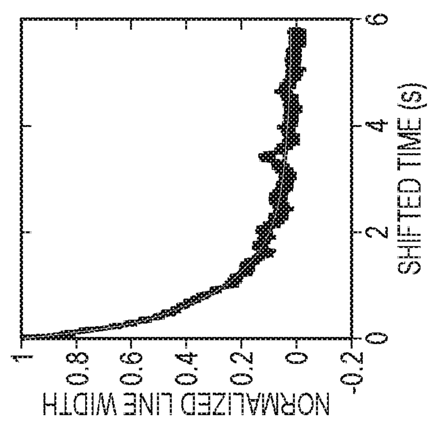


FIG. 14B

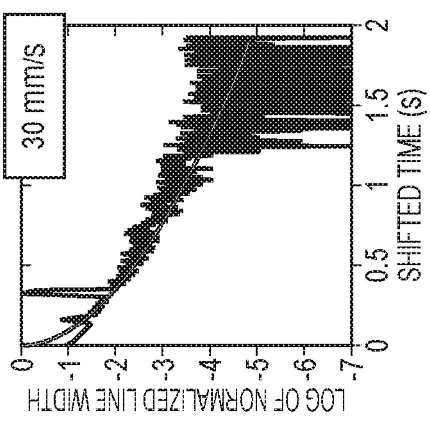


FIG. 14E

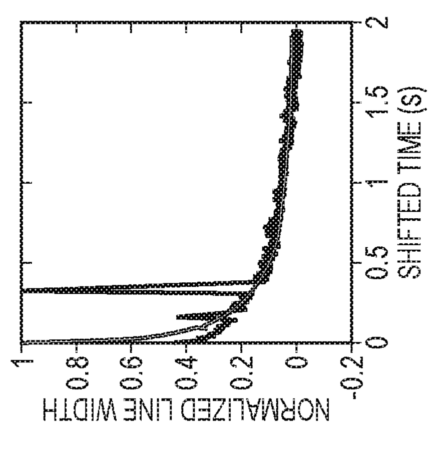


FIG. 14F

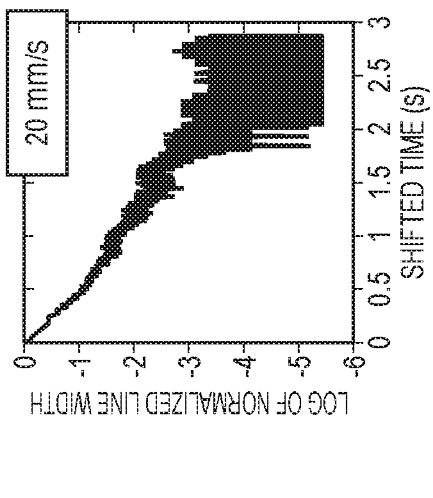


FIG. 14C

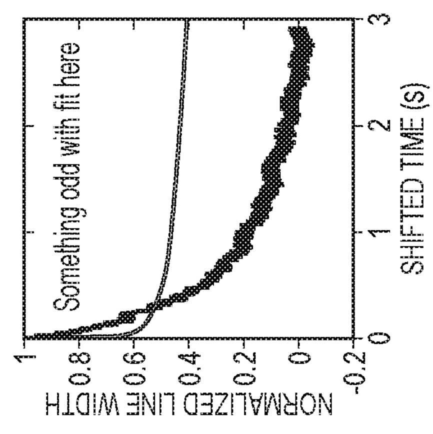


FIG. 14D

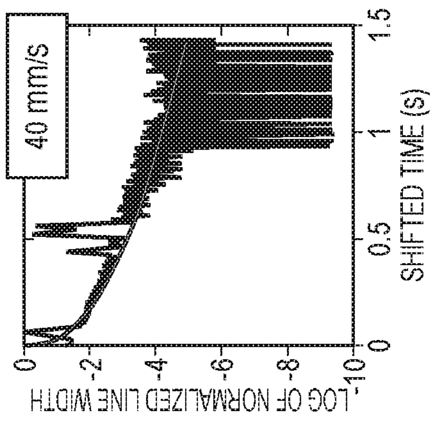


FIG. 14G

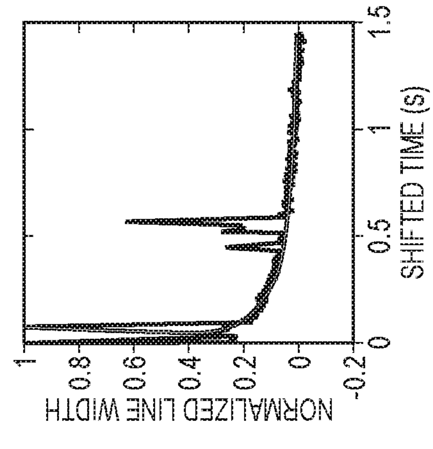


FIG. 14H

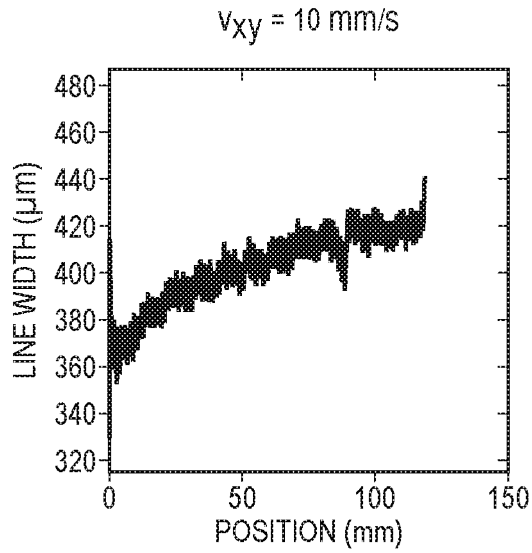


FIG. 15A

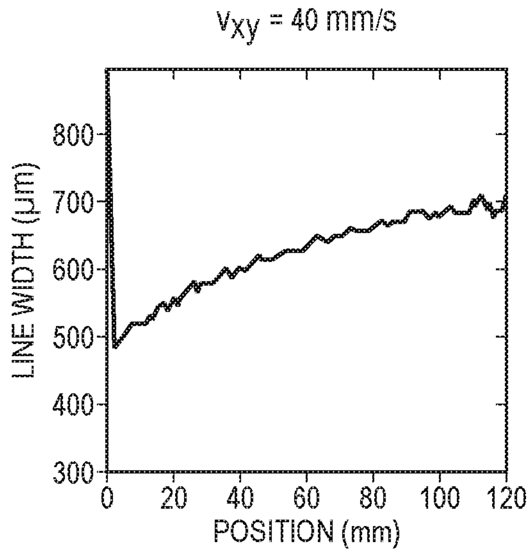


FIG. 15C

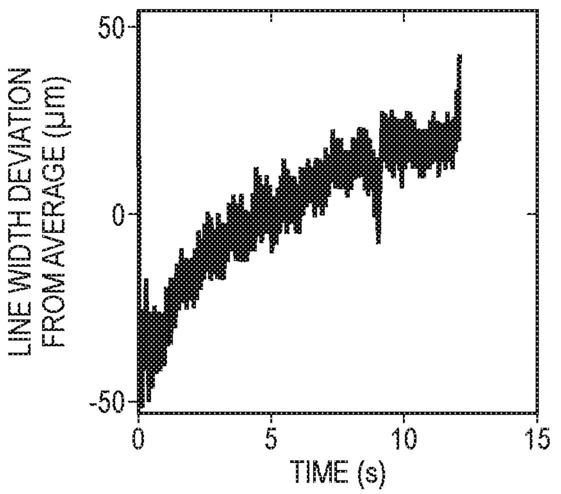


FIG. 15B

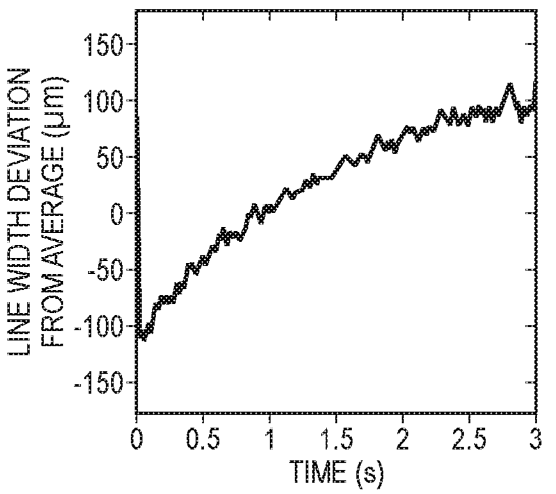


FIG. 15D

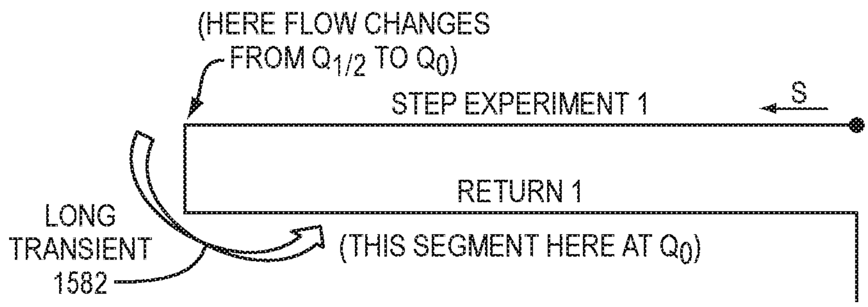


FIG. 15E

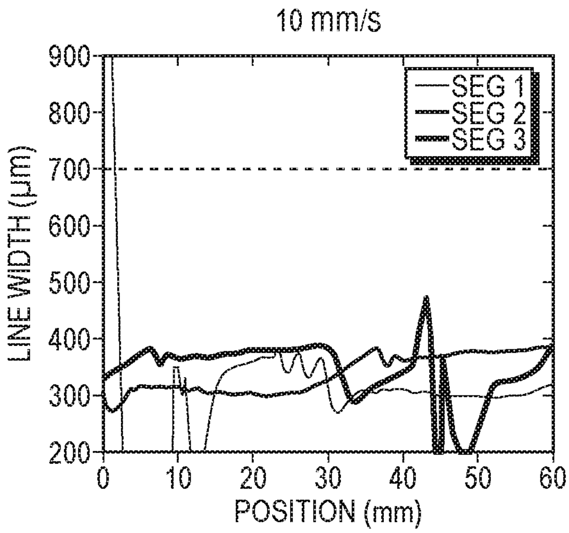


FIG. 16A

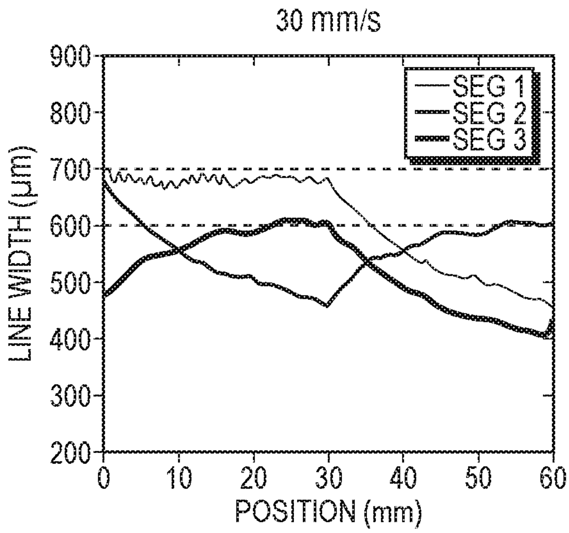


FIG. 16C

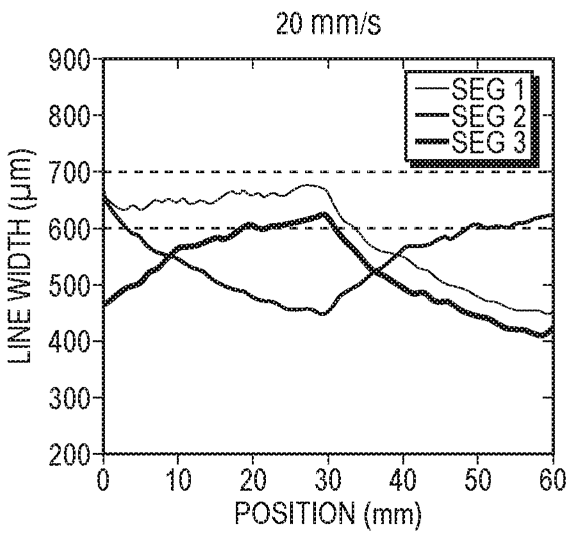


FIG. 16B

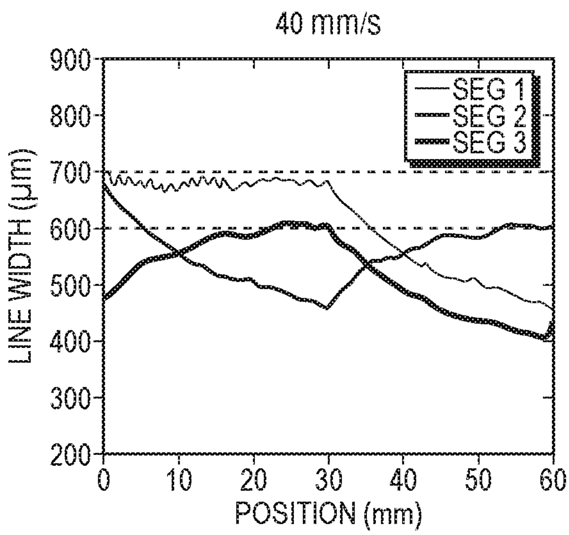


FIG. 16D

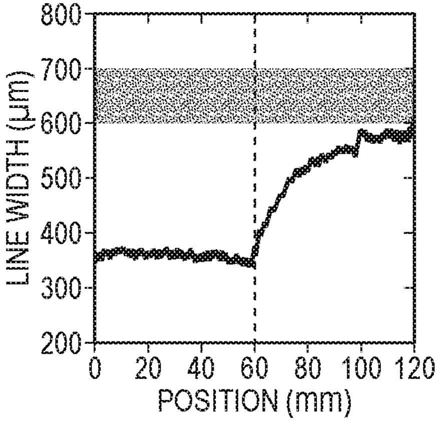


FIG. 17A

RANGE OF OBSERVED WIDTH FROM
MULTIPLE STEP EXPERIMENT

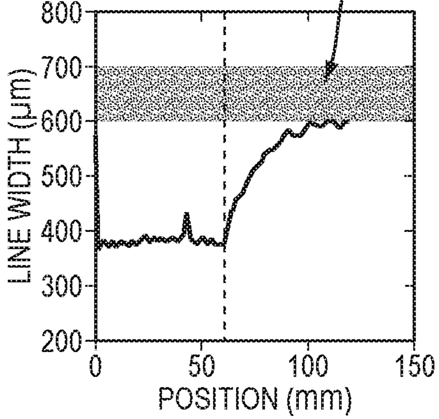


FIG. 17C

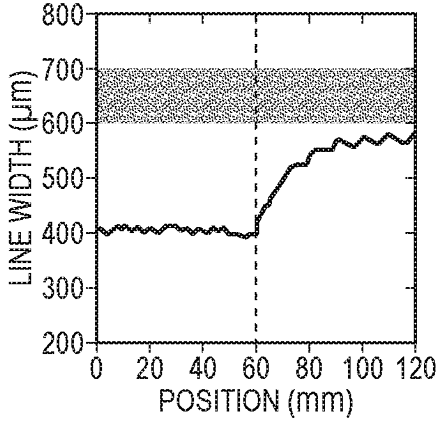


FIG. 17E

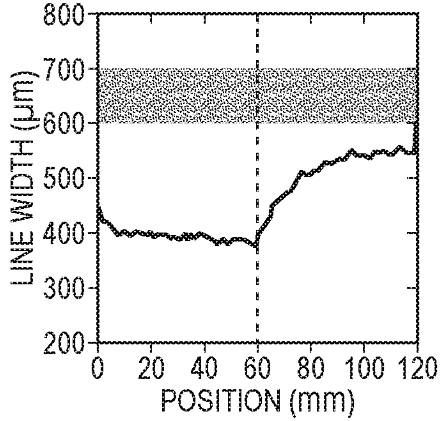


FIG. 17G

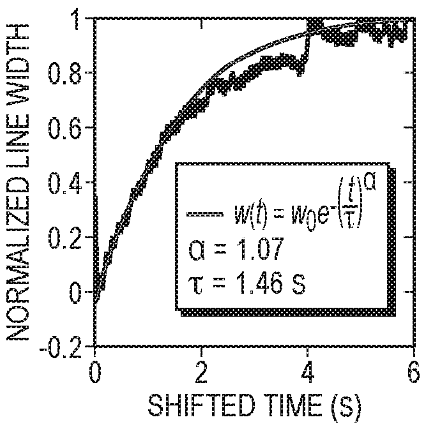


FIG. 17B

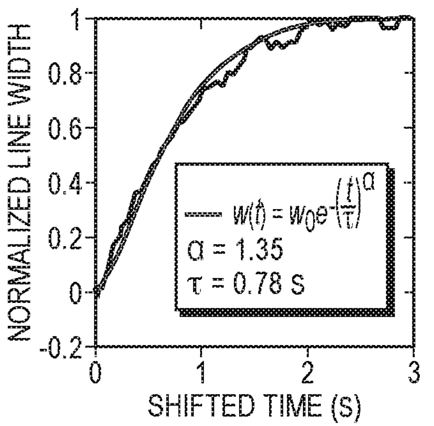


FIG. 17D

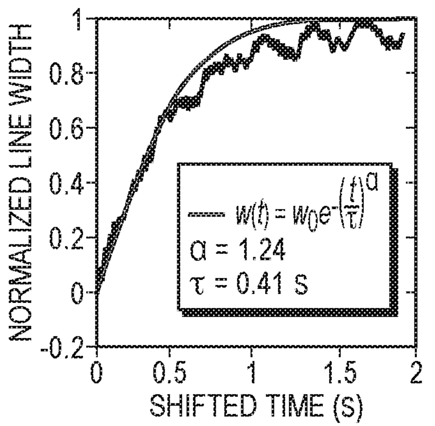


FIG. 17F

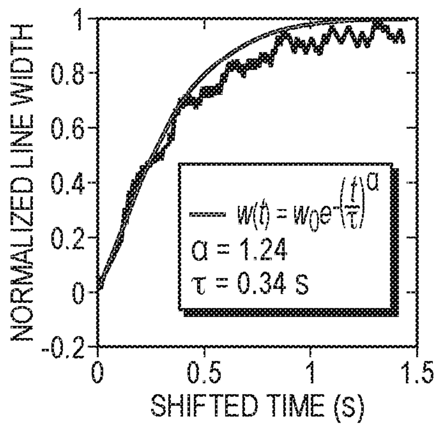


FIG. 17H

$Q = \tanh(b(t - t_0)) + 1$

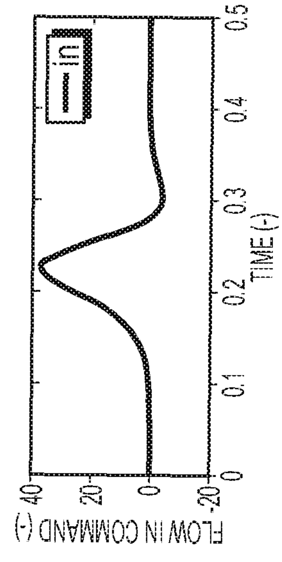


FIG. 18A

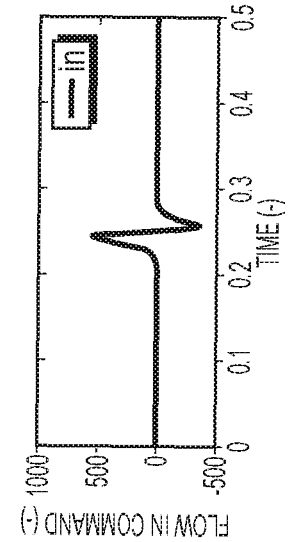


FIG. 18D

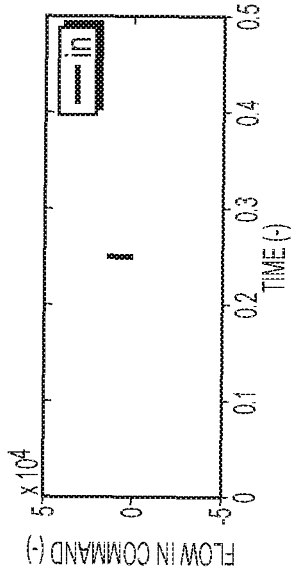


FIG. 18G

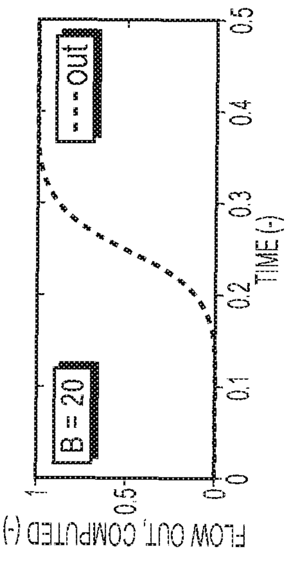


FIG. 18B

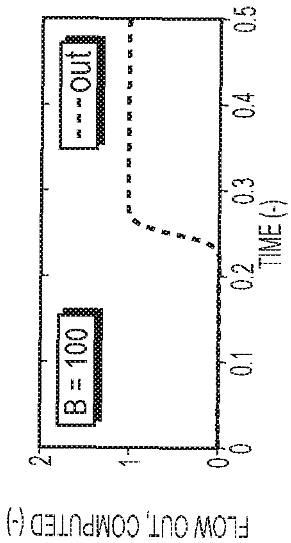


FIG. 18E

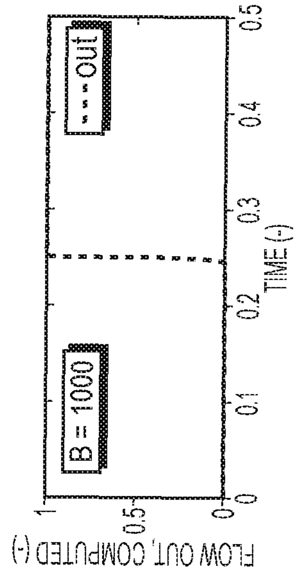


FIG. 18H

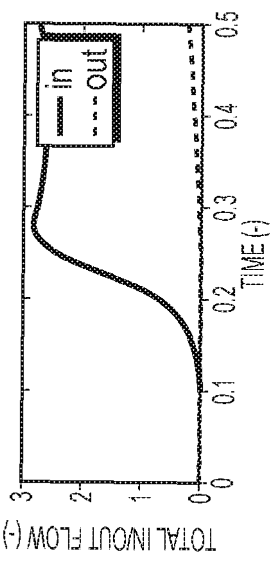


FIG. 18C

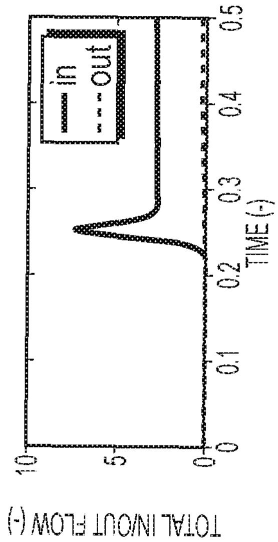


FIG. 18F

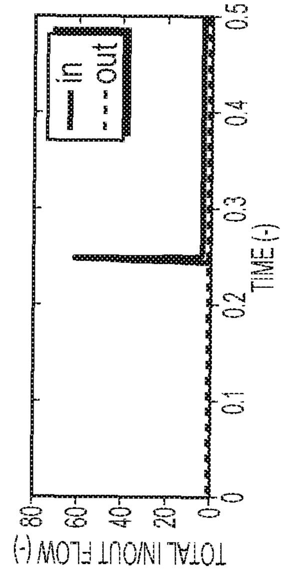


FIG. 18I

FIG. 19A

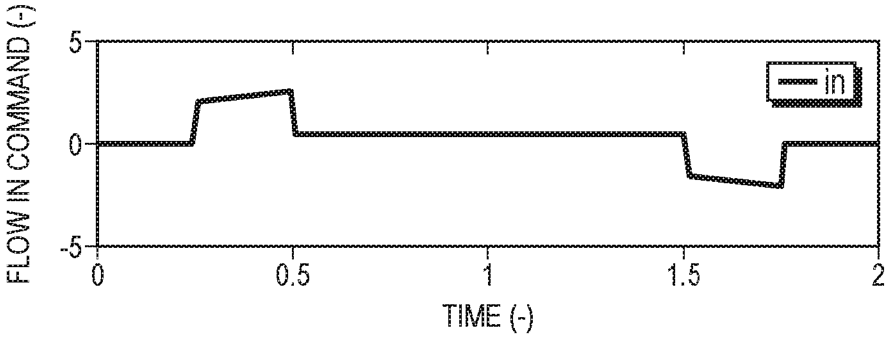


FIG. 19B

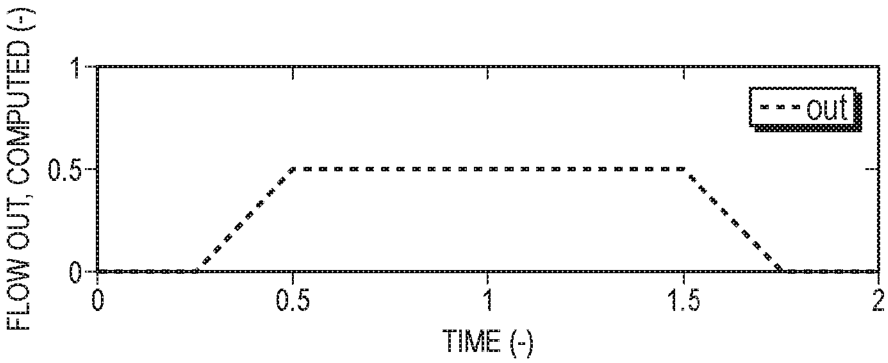


FIG. 19C

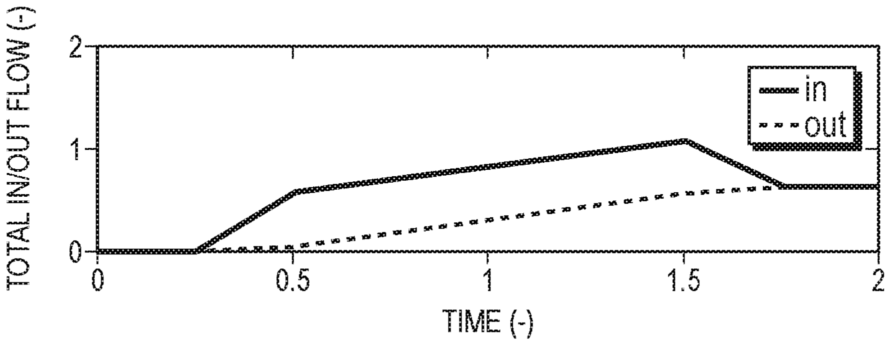

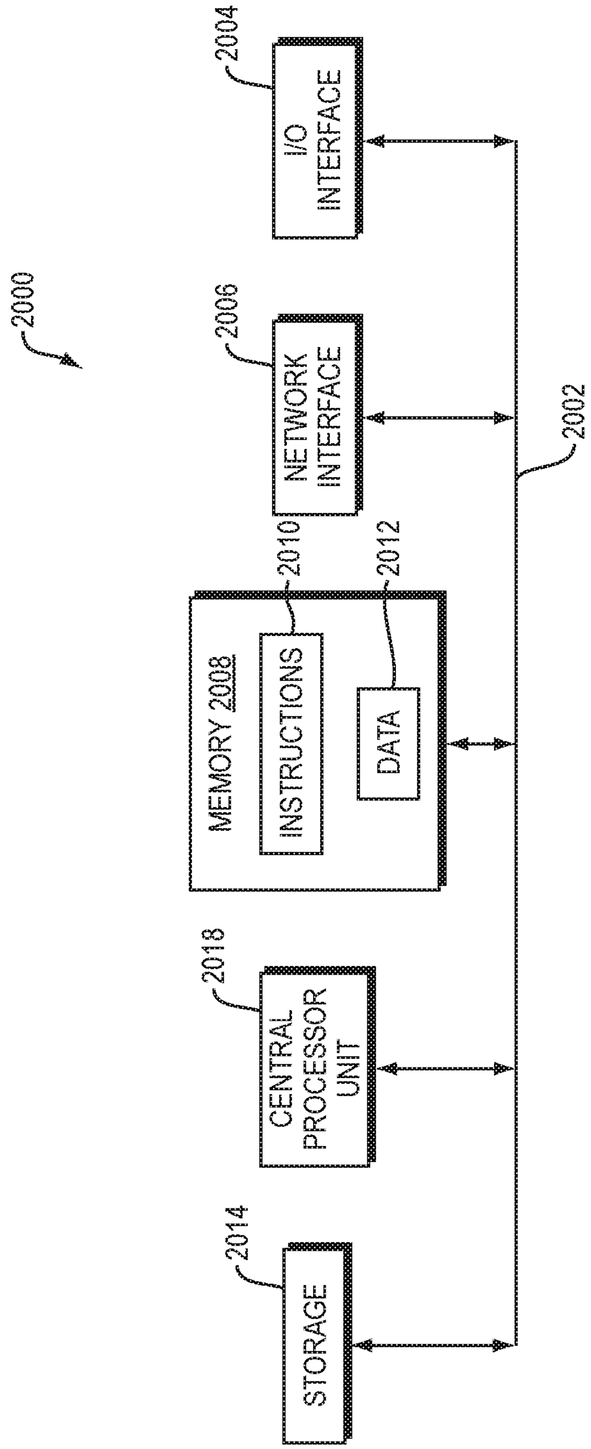
2000
2004
I/O INTERFACE
2006
NETWORK INTERFACE
2002
MEMORY 2008
INSTRUCTIONS
2010
DATA
2012
2018
CENTRAL PROCESSOR UNIT
2014
STORAGE

FIG. 20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 03051598 A1